# EUROPEAN PATENT APPLICATION

(11) **EP 4 395 399 A1**
(43) Date of publication of application: **03.07.2024**
(21) Application number: 22861764.3
(22) Date of filing: 26.08.2022
(51) Int. Cl.: H04W 16/26, H04W 16/28, H04B 7/155, H04B 7/06, H04B 7/08, H04B 17/318, H04B 17/373

(54) **CELL COVERAGE EXTENDING METHOD AND DEVICE THEREFOR**

(30) Priority: 26.08.2021 KR 20210113308; 09.09.2021 KR 20210120645; 13.12.2021 KR 20210178049
(71) Applicant: Electronics and Telecommunications Research Institute, Daejeon 34129 (KR)
(72) Inventor: MOON, Sung Hyun, Daejeon 34129 (KR); KIM, Cheul Soon, Daejeon 34129 (KR); LEE, Jung Hoon, Daejeon 34129 (KR)
(74) Representative: Betten & Resch
(86) International application number: PCT/KR2022/012830
(87) International publication number: WO 2023/027556

(57) **Abstract**

An operation method of a relay in a mobile communication system may comprise the steps of: receiving information relating to a backhaul reception beam and/or a backhaul transmission beam from a base station; receiving information relating to an access link transmission beam and/or an access link reception beam from the base station or obtaining information relating to an access link transmission beam and/or an access link reception beam from the information relating to the backhaul reception beam and/or backhaul transmission beam; communicating with the base station by using the backhaul reception beam and/or the backhaul transmission beam formed using the information relating to the backhaul reception beam and/or backhaul transmission beam; and communicating with a terminal by using the access link transmission beam and/or the access link reception beam formed using the information relating to the access link transmission beam and/or access link reception beam.

## Description

### [Technical Field]

The present disclosure relates to cell coverage extension methods in a mobile communication system, and more particularly, to methods for extending a cell coverage by using a relay node or intelligent reflecting surface (IRS) in a mobile communication system, and apparatuses therefor.

### [Background Art]

Communication systems are continuously evolving to expand communication infrastructure for the realization of a hyper-connected society. For example, a new radio (NR) communication system can support a frequency band of up to 100 GHz as well as a frequency band of 6 GHz or below. In addition, as compared to the conventional communication system (e.g., long-term evolution (LTE) communication system), the NR communication system can support more diverse services and scenarios. For example, usage scenarios of the NR communication system may include enhanced Mobile BroadBand (eMBB), Ultra-Reliable Low-Latency communication (URLLC), massive Machine Type Communication (mMTC), and the like. In addition, the sixth generation (6G) communication system, which is being discussed recently, is expected to enable more diverse services and user experiences by utilizing a terahertz (THz) frequency band, artificial intelligence, satellite communication, quantum technologies, and the like. There are various requirements in the industry that such the communication system must satisfy, and high-level communication technologies are required to achieve the requirements.

### [Disclosure]

### [Technical Problem]

The present disclosure is directed to providing cell coverage extension methods using a relay node or intelligent reflecting surface.

The present disclosure is also directed to providing configuration of apparatuses for performing the cell coverage extension methods.

### [Technical Solution]

An operation method of a repeater in a mobile communication system, according to an exemplary embodiment of the present disclosure for achieving the above-described objective, may comprise: receiving, from a base station, information on a backhaul reception beam and/or a backhaul transmission beam; receiving, from the base station, information on an access link transmission beam and/or an access link reception beam, or obtaining information on the access link transmission beam and/or the access link reception beam from the information on the backhaul reception beam and/or the backhaul transmission beam; performing communication with the base station by using the backhaul reception beam and/or the backhaul transmission beam formed using the information on the backhaul reception beam and/or the backhaul transmission beam; and performing communication with a terminal by using the access link transmission beam and/or the access link reception beam formed using the information on the access link transmission beam and/or the access link reception beam, wherein the backhaul reception beam is a beam for the repeater to receive a signal from the base station, the backhaul transmission beam is a beam for the repeater to transmit a signal to the base station, the access link transmission beam is a beam for the repeater to transmit a signal to the terminal, and the access link reception beam is a beam for the terminal to receive a signal from the repeater.

The information on the backhaul reception beam may be indicated based on a quasi-co-location (QCL) source signal having a QCL relationship with a downlink signal transmitted from the base station to the repeater and a QCL parameter for which the QCL relationship is established.

The information on the backhaul transmission beam may be indicated based on a source signal having a QCL relationship or spatial relation with an uplink signal transmitted from the repeater to the base station or a downlink signal transmitted from the base station to the repeater and a QCL parameter for which the QCL relationship or spatial relation is established.

The information on the access link transmission beam may be indicated based on a codebook, the codebook including entry(ies) each corresponding to a precoder applied to a signal transmitted to the terminal through an access link with the terminal.

At least a part of the codebook may be preconfigured in the repeater or received from the base station, and the information on the access link transmission beam may be indicated by index(es) indicating at least one entry belonging to the codebook.

The information on the access link reception beam may be indicated based on a codebook, the codebook including entry(ies) each corresponding to a reception filter applied to a signal received from the terminal through an access link with the terminal.

At least a part of the codebook may be preconfigured in the repeater or received from the base station, and the information on the access link reception beam may be indicated by index(es) indicating at least one entry belonging to the codebook.

When the repeater is configured as an intelligent reflecting surface (IRS), the information on the backhaul transmission beam and/or the information on the access link transmission beam may include phase shift values for a plurality of phase control elements constituting the IRS.

The backhaul transmission beam and/or the access link transmission beam may be formed based on beamforming by the phase control elements.

An operation method of a base station in a mobile communication system, according to another exemplary embodiment of the present disclosure for achieving the above-described objective, may comprise: transmitting, to a repeater, information on a backhaul reception beam and/or a backhaul transmission beam; transmitting, to the repeater, information on an access link transmission beam and/or an access link reception beam; performing communication with the repeater by using the backhaul reception beam and/or the backhaul transmission beam formed using the information on the backhaul reception beam and/or the backhaul transmission beam; and allowing the repeater to communicate with a terminal by using the access link transmission beam and/or the access link reception beam formed using the information on the access link transmission beam and/or the access link reception beam, wherein the backhaul reception beam is a beam for the repeater to receive a signal from the base station, the backhaul transmission beam is a beam for the repeater to transmit a signal to the base station, the access link transmission beam is a beam for the repeater to transmit a signal to the terminal, and the access link reception beam is a beam for the terminal to receive a signal from the repeater.

The information on the backhaul reception beam may be indicated based on a quasi-co-location (QCL) source signal having a QCL relationship with a downlink signal transmitted from the base station to the repeater and a QCL parameter for which the QCL relationship is established.

The information on the backhaul transmission beam may be indicated based on a source signal having a QCL relationship or spatial relation with an uplink signal transmitted from the repeater to the base station or a downlink signal transmitted from the base station to the repeater and a QCL parameter for which the QCL relationship or spatial relation is established.

The information on the access link transmission beam may be indicated based on a codebook, the codebook including entry(ies) each corresponding to a precoder applied to a signal transmitted to the terminal through an access link with the terminal.

The information on the access link reception beam may be indicated based on a codebook, the codebook including entry(ies) each corresponding to a reception filter applied to a signal received from the terminal through an access link with the terminal.

When the repeater is configured as an intelligent reflecting surface (IRS), the information on the backhaul transmission beam and/or the information on the access link transmission beam may include phase shift values for a plurality of phase control elements constituting the IRS.

A repeater, according to an exemplary embodiment of the present disclosure for achieving the above-described another objective, may comprise: a processor; at least one transceiver connected to the processor; and a memory storing at least one instruction executable by the processor, wherein when executed by the processor, the at least one instruction causes the repeater to: receive, from a base station and through the at least one transceiver, information on a backhaul reception beam and/or a backhaul transmission beam; receive, from the base station and through the at least one transceiver, information on an access link transmission beam and/or an access link reception beam, or obtain information on the access link transmission beam and/or the access link reception beam from the information on the backhaul reception beam and/or the backhaul transmission beam; perform communication, with the base station and through the at least one transceiver, by using the backhaul reception beam and/or the backhaul transmission beam formed using the information on the backhaul reception beam and/or the backhaul transmission beam; and perform communication, with a terminal and through the at least one transceiver, by using the access link transmission beam and/or the access link reception beam formed using the information on the access link transmission beam and/or the access link reception beam, wherein the backhaul reception beam is a beam for the repeater to receive a signal from the base station, the backhaul transmission beam is a beam for the repeater to transmit a signal to the base station, the access link transmission beam is a beam for the repeater to transmit a signal to the terminal, and the access link reception beam is a beam for the terminal to receive a signal from the repeater.

The information on the backhaul reception beam may be indicated based on a quasi-co-location (QCL) source signal having a QCL relationship with a downlink signal transmitted from the base station to the repeater and a QCL parameter for which the QCL relationship is established.

The information on the backhaul transmission beam may be indicated based on a source signal having a QCL relationship or spatial relation with an uplink signal transmitted from the repeater to the base station or a downlink signal transmitted from the base station to the repeater and a QCL parameter for which the QCL relationship or spatial relation is established.

The information on the access link transmission beam may be indicated based on a codebook, the codebook including entry(ies) each corresponding to a precoder applied to a signal transmitted to the terminal through an access link with the terminal.

The information on the access link reception beam may be indicated based on a codebook, the codebook including entry(ies) each corresponding to a reception filter applied to a signal received from the terminal through an access link with the terminal.

### [Advantageous Effects]

According to the exemplary embodiments of the present disclosure, cell coverage extension methods using a relay or an intelligent reflecting surface (IRS) may be provided. Accordingly, the performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a beamforming operation method using a repeater.
FIG. 4A is a conceptual diagram illustrating a first exemplary embodiment of a beamforming operation method using an IRS.
FIG. 4B is a conceptual diagram illustrating a second exemplary embodiment of a beamforming operation method using an IRS.
FIG. 5 is a conceptual diagram illustrating a first exemplary embodiment of a beamforming operation method of a relay node for beam management of a terminal.
FIG. 6 is a conceptual diagram illustrating shows a second exemplary embodiment of a beamforming operation method of a relay node for beam management of a terminal.
FIGS. 7A and 7B are conceptual diagrams illustrating a first exemplary embodiment of multi-beam-based SSB transmission and SSB resource allocation.
FIG. 8A is a conceptual diagram illustrating a first exemplary embodiment of a method of indicating an access link beam of a relay node.
FIG. 8B is a conceptual diagram illustrating a second exemplary embodiment of a method of indicating an access link beam of a relay node.
FIG. 9 is a conceptual diagram illustrating a first exemplary embodiment of a method for determining a transmission timing of a relay node.

### [Best mode of the Invention]

Embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

Accordingly, while the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, `LTE' may refer to `4G communication system', `LTE communication system', or `LTE-A communication system', and 'NR' may refer to `SG communication system' or `NR communication system'.

In exemplary embodiments, `configuration of an operation (e.g., transmission operation)' may mean 'signaling of configuration information (e.g., information element(s), parameter(s)) for the operation' and/or 'signaling of information indicating performing of the operation'. `Configuration of information element(s) (e.g., parameter(s))' may mean that the corresponding information element(s) are signaled. `Configuration of a resource (e.g., resource region)' may mean that configuration information of the corresponding resource is signaled. The signaling may be performed based on at least one of system information (SI) signaling (e.g., transmission of system information block (SIB) and/or master information block (MIB)), RRC signaling (e.g., transmission of RRC parameters and/or higher layer parameters), MAC control element (CE) signaling, PHY signaling (e.g., transmission of downlink control information (DCI), uplink control information (UCI), and/or sidelink control information (SCI)), or a combination thereof.

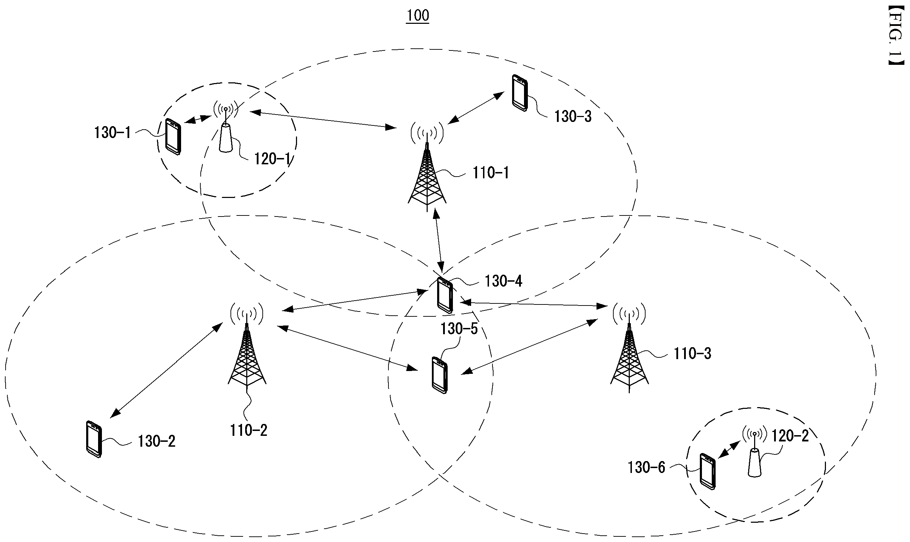

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may mean an apparatus or a device. Exemplary embodiments may be performed by an apparatus or device. A structure of the apparatus (or, device) may be as follows.

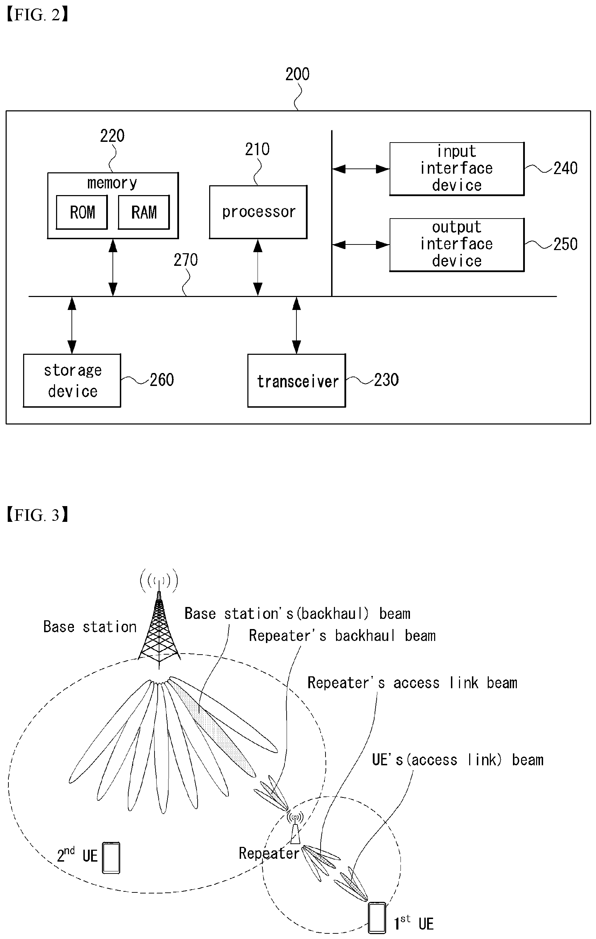

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. The respective components included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

The present disclosure relates to cell coverage extension methods using a relay node in a communication system, and more particularly, may include methods for a base station to control the relay node and operations method of the relay node in accordance therewith. The following exemplary embodiments may be applied to an NR communication system, and may be applied to other communication systems in addition to the NR communication system (e.g., LTE communication system, fifth generation (5G) communication system, sixth generation (6G) communication system, and/or the like).

A numerology applied to physical signals and channels in the communication system (e.g., NR communication system or 6G communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g., extended CP) may be additionally supported for a specific subcarrier spacing (e.g., 60 kHz).

Table 1 relates to a first exemplary embodiment of a method for configuring numerologies for a CP-OFDM based communication system.

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. The length of an actual time resource used for transmission, measurement, scheduling, resource configuration, etc. may not match the length of a slot. A mini-slot may include consecutive symbol(s), and the length of a mini-slot may be shorter than the length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., the length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE in the frequency domain may include one or more RBs.

In the communication system, a slot (e.g., slot format) may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the periodic operation configured by the base station may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g., overridden flexible symbol).

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The base station and the terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. RBs constituting one bandwidth part may be consecutive in the frequency domain. One numerology may be used for transmission of signals (e.g., transmission of control channel or data channel) in one bandwidth part. In exemplary embodiments, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology (e.g., a subcarrier spacing and a CP length) applied to the bandwidth part. Also, the configuration information of the bandwidth part may further include information indicating a position of a start RB (e.g., start PRB) of the bandwidth part and information indicating the number of RBs (e.g., PRBs) constituting the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, an RB may mean a common RB (CRB). Alternatively, an RB may mean a PRB or a virtual RB (VRB). In the NR communication system, a CRB may refer to an RB constituting a set of consecutive RBs (e.g., common RB grid) based on a reference frequency (e.g., point A). Carriers, bandwidth part, and the like may be arranged on the common RB grid. That is, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A minimum resource unit constituting a PDCCH may be a resource element group (REG). An REG may be composed of one PRB (e.g., 12 subcarriers) in the frequency domain and one OFDM symbol in the time domain. Thus, one REG may include 12 resource elements (REs). A demodulation reference signal (DMRS) for demodulating a PDCCH may be mapped to 3 REs among 12 REs constituting the REG, and control information (e.g., modulated DCI) may be mapped to the remaining 9 REs.

One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of six REGs.

A control resource set (CORESET) may be a resource region in which the terminal performs a blind decoding on PDCCHs. The CORESET may be composed of a plurality of REGs. The CORESET may consist of one or more PRBs in the frequency domain and one or more symbols (e.g., OFDM symbols) in the time domain. The symbols constituting one CORESET may be consecutive in the time domain. The PRBs constituting one CORESET may be consecutive or non-consecutive in the frequency domain. One DCI (e.g., one DCI format or one PDCCH) may be transmitted within one CORESET. A plurality of CORESETs may be configured with respect to a cell and a terminal, and the plurality of CORESETs may overlap in time-frequency resources.

A CORESET may be configured in the terminal by a PBCH (e.g., system information or a master information block (MIB) transmitted on the PBCH). The identifier (ID) of the CORESET configured by the PBCH may be 0. That is, the CORESET configured by the PBCH may be referred to as a CORESET #0. A terminal operating in an RRC idle state may perform a monitoring operation in the CORESET #0 in order to receive a first PDCCH in the initial access procedure. Not only terminals operating in the RRC idle state but also terminals operating in the RRC connected state may perform monitoring operations in the CORESET #0. The CORESET may be configured in the terminal by other system information (e.g., system information block type 1 (SIB 1)) other than the system information transmitted through the PBCH. For example, for reception of a random access response (or Msg2) in a random access procedure, the terminal may receive the SIB 1 including the configuration information of the CORESET. Also, the CORESET may be configured in the terminal by terminal-specific higher layer signaling (e.g., RRC signaling).

In each downlink bandwidth part, one or more CORESETs may be configured for the terminal. The terminal may monitor PDCCH candidate(s) for the CORESET configured in the downlink active bandwidth part. Alternatively, the terminal may monitor PDCCH candidate(s) for a CORESET (e.g., CORESET #0) configured in a downlink bandwidth part other than the downlink active bandwidth part. The initial downlink active bandwidth part may include the CORESET #0 and may be associated with the CORESET #0. The CORESET #0 having a quasi-co-location (QCL) relation with an SS/PBCH block may be configured for the terminal in a primary cell (PCell), a secondary cell (SCell), and a primary secondary cell (PSCell). In the secondary cell (SCell), the CORESET #0 may not be configured for the terminal.

In the present disclosure, a set of signals including a synchronization signal may be transmitted to the terminal(s), which may be referred to as a synchronization signal block (SSB). The signals constituting the SSB may be predefined in the technical specification. The synchronization signal included in the SSB may be a primary synchronization signal (PSS), a secondary synchronization signal (SSS), or the like. The SSB may further include the above-described signals (e.g., PBCH, DM-RS for decoding the PBCH, CSI-RS, etc.) in addition to the synchronization signal, and may be repeatedly transmitted through a beam sweeping operation. In the NR communication system, the SSB may refer to a synchronization signal (SS)/PBCH block, and an SSB resource may refer to an SS/PBCH block resource.

A search space may be a set of candidate resource regions through which PDCCHs can be transmitted. The terminal may perform a blind decoding on each of the PDCCH candidates within a predefined search space. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH. The terminal may periodically monitor the search space, and may monitor the search space at one or more time positions (e.g., PDCCH monitoring occasions, CORESET) within one period.

A PDCCH candidate may be configured with CCEs selected by a predefined hash function within an occasion of the CORESET or the search space. The search space may be defined and configured for each CCE aggregation level. In this case, a set of search spaces for all CCE aggregation levels may be referred to as a `search space set'. In exemplary embodiments, 'search space' may mean `search space set', and `search space set' may mean 'search space'.

A search space set may be logically associated with one CORESET. One CORESET may be logically associated with one or more search space sets. A search space set for transmitting a common DCI or a group common DCI may be referred to as a common search space set (hereinafter, referred to as a `CSS set'). The common DCI or the group common DCI may include at least one of resource allocation information of a PDSCH for transmission of system information, paging, a power control command, SFI, or a preemption indicator. In the case of the NR communication system, the common DCI may correspond to DCI formats 0_0, 1_0, etc., and a cyclic redundancy check (CRC) of the common DCI may be scrambled by a system information-radio network temporary identifier (SI-RNTI), paging-RNTI (P-RNTI), random access-RNTI (RA-RNTI), temporary cell-RNTI (TC-RNTI), or the like. The group common DCI may correspond to a DCI format 2_X (X=0, 1, 2, ...), or the like, and a CRC of the group common DCI may be scrambled by a slot format indicator-RNTI (SFI-RNTI) or the like. The CSS set may include Type 0, Type 0A, Type 1, Type 2, and Type 3 CSS sets.

A search space set for transmitting a UE-specific DCI may be referred to as a UE-specific search space set (hereinafter, referred to as a `USS set'). The UE-specific DCI may include scheduling and resource allocation information for a PDSCH, PUSCH, PSSCH, or the like. In the case of the NR communication system, the UE-specific DCI may correspond to DCI formats 0_1, 0_2, 1_1, 1_2, 3_0, 3_1, or the like, and a CRC of the UE-specific DCI may be scrambled by a C-RNTI, configured scheduling-RNTI (CS-RNTI), modulation and coding scheme-C-RNTI (MCS-C-RNTI), or the like. In consideration of scheduling freedom or fallback transmission, a UE-specific DCI may be transmitted even in a CSS set. In this case, the UE-specific DCI may be transmitted according to the DCI format corresponding to the common DCI. For example, the terminal may monitor a PDCCH (e.g., DCI formats 0_0, 0_1) whose CRC is scrambled with a C-RNTI, CS-RNTI, MCS-C-RNTI, or the like in the CSS set.

The Type 0 CSS set may be used for receiving a DCI scheduling a PDSCH including an SIB1, and may be configured through a PBCH or cell-specific RRC signaling. The ID of the Type 0 CSS set may be assigned as or set to 0. The type 0 CSS set may be logically combined with the CORESET #0.

The terminal may assume that a PDCCH DM-RS has a QCL relationship with a certain signal (e.g., SS/PBCH block, CSI-RS, PDSCH DM-RS, PDCCH DM-RS, or the like). In addition, since a PDCCH has the same antenna port as a corresponding PDCCH DM-RS, the PDCCH and the PDCCH DM-RS may have a QCL relationship with each other. Therefore, the terminal may acquire information on large-scale propagation characteristics of a radio channel experienced by the PDCCH and the PDCCH DM-RS through the QCL assumption, and may utilize the information on the large-scale propagation characteristics for channel estimation, reception beamforming, and the like. A QCL parameter may include at least one of a delay spread, Doppler spread, Doppler shift, average gain, average delay, or spatial Rx parameter. The spatial Rx parameter may correspond to at least one characteristic of a reception beam, reception channel spatial correlation, or transmission/reception beam pair. For convenience, the spatial Rx parameter may be referred to as `spatial QCL'. The PDCCH may be used in a sense including the PDCCH DM-RS, and an expression that the PDCCH has a QCL relationship with a certain signal may include the meaning that the PDCCH DM-RS of the PDCCH has a QCL relationship with the certain signal. A signal having a QCL relationship with the PDCCH or a resource thereof may be referred to as a QCL source, QCL source signal, QCL source resource, or the like.

PDCCHs transmitted in the same CORESET (and a search space set, PDCCH monitoring occasions, etc. corresponding thereto) may have the same QCL relationship. That is, a unit of a set for which the terminal assumes the same QCL may be a CORESET, and the QCL assumption for each of the CORESETs may be independent. In an exemplary embodiment, a QCL, QCL source, etc. of a certain CORESET may mean a QCL, QCL source, etc. of a PDCCH received through the corresponding CORESET, respectively. Exceptionally, different QCL assumptions may be applied to search space sets corresponding to one CORESET. For example, a search space set for monitoring an RA-RNTI (e.g., Type 1 CSS set) and other search space sets may have different QCL relationships.

A QCL relationship or QCL assumption (e.g., QCL source, QCL type, etc.) of a CORESET may be determined by a predefined method. For example, the terminal may assume that a PDCCH DM-RS received through a certain CORESET or a certain search space set has a QCL relationship, with respect to a predefined QCL type, with an SS/PBCH block and/or CSI-RS selected in an initial access or random access procedure. Here, the QCL type may mean a set of one or more QCL parameter(s). Alternatively, a QCL relationship or QCL assumption (e.g., QCL source, QCL type, etc.) of a CORESET may be signaled from the base station to the terminal (e.g., through RRC signaling, medium access control (MAC) control element (CE) signaling, DCI signaling, or a combination thereof). That is, the base station may configure a transmission configuration information (TCI) state for a CORESET to the terminal. In general, the TCI state may include an ID of a signal (e.g., a QCL source or QCL source resource of a PDCCH DM-RS) having a QCL relationship with a DM-RS (e.g., the PDCCH DM-RS) of a physical channel to which the TCI is applied, and/or at least one QCL type thereof. For example, the base station may configure one or more TCI state candidates for each CORESET to the terminal through RRC signaling, and may indicate or configure one TCI state to be used for CORESET monitoring of the terminal from among the one or more TCI state candidates to the terminal through MAC signaling (or DCI) signaling). When there is one TCI state candidate configured by RRC signaling, the MAC signaling procedure (or DCI signaling procedure) may be omitted. The terminal may perform PDCCH monitoring and reception operations for the corresponding CORESET based on the TCI state configuration information received from the base station.

The above-described transmission/reception operation between the base station and the terminal may be equally or similarly applied between the base station and a relay node and between a relay node and the terminal, which will be described below. That is, in the above-described operation, the terminal may be replaced by a relay node. Alternatively, in the above operation, the base station may be replaced with a relay node.

In a communication system, beam operations of a high frequency band and a low frequency band may be different from each other. Since a path loss of signals due to a channel is relatively small in a low frequency band (e.g., a band of 6 GHz or below), a signal may be transmitted/received using a beam having a wide beamwidth. In particular, in case of a control channel, the entire coverage of a cell (or sector) may be covered even with a single beam. However, in a high frequency band (e.g., a band of 6 GHz or above) having a large signal path loss, beamforming by a large-scale antenna may be used to extend the coverage. In addition, beamforming may be applied not only to data channels but also to common signals and control channels. A communication node (e.g., base station) may form beams having a small beam width through a plurality of antennas, and transmit and receive a signal multiple times by using a plurality of beams having different directivity to cover the entire spatial area of a cell (or sector). An operation of repeatedly transmitting a signal in a plurality of time resources by using a plurality of beams may be referred to as a beam sweeping operation. A system for transmitting a signal using a plurality of beams having such a narrow beam width may be referred to as a multi-beam system.

For the multi-beam system operation, the base station may manage transmission and reception beams of a terminal. Also, the terminal may manage its own transmission and reception beams. The terminal may measure a beam quality with respect to a signal (e.g., SSB, CSI-RS, etc.) transmitted from the base station or a transmission and reception point (TRP), and may report a measurement result of the beam quality to the base station. For example, the terminal may calculate a beam quality measurement value such as reference signal received power (RSRP) and signal-to-interference-plus-noise ratio (SINR) for each beam (e.g., each signal or resource), and report the optimal beam(s) and measurement value(s) corresponding thereto to the base station. The base station may determine a transmission beam for the terminal based on the beam quality measurement values received from the terminal. In addition, based on the beam quality measurement values received from the terminal, the base station may configure information (e.g., QCL information, TCI state information, etc.) required for the terminal to receive physical signals and channels (e.g., PDCCH, PDSCH, CSI-RS, PUCCH, PUSCH, SRS, PRACH, etc.) to the terminal. In exemplary embodiments, unless otherwise specified, 'beam' may refer to `transmission beam', `reception beam', and/or 'transmission/reception beam pair'. Also, the terms 'beam', `transmission beam', `reception beam', and 'transmission/reception beam pair' may be used in the same sense. Hereinafter, `transmission beam' may correspond to 'precoder', `beamformer', `transmission spatial filter', and the like, and information on a transmission beam may include information on a precoder, beamformer, transmission spatial filter, transmission spatial relationship information, spatial transmission parameters, and the like corresponding thereto. In addition, `reception beam' may correspond to 'reception filter', `reception spatial filter', `reception beamformer', and the like, and information on a reception beam may include information on a reception filter, reception spatial filter, reception beamformer, or the like, information on a spatial QCL, information on QCL type D, reception spatial relationship information, spatial reception parameters, and the like. Also, hereinafter, 'multi-beam' may mean at least one beam(s).

Meanwhile, a path loss of signals has a positive correlation with a frequency band (i.e., frequency value). In very high frequency band (e.g., millimeter wave band, terahertz band) communication, since a path loss of signals is very large, it may be necessary to use an ultra-fine beam having a very small beam width to provide a target coverage. However, although a beam arrival distance increases as the beam width decreases, a beam quality may be rapidly deteriorated even by a small movement of a terminal or a small channel change, and frequent beam changes may be required. Accordingly, a beam management load may increase.

As another method for coverage enhancement, a relay node may be used. The relay node may serve to receive a signal from a base station or TRP and forward it to the terminal or, conversely, receive a signal from a terminal and forward it to a base station or TRP. A signal received at the relay node may be amplified or beamforming may be applied thereto so that the signal is transmitted back to a counterpart node, and the coverage of the signal may be extended. The relay node may be classified into various types according to its function. For example, an amplify-and-forward (AF) relay may simply amplify a received signal and retransmit the amplified signal. The AF relay may be referred to as a layer 1 (L1) relay, repeater, or the like. A decode- and-forward (DF) relay may decode a received signal to obtain data, re-encode the data, and transmit the re-encoded data. The DF relay may be referred to as a layer 2 (L2) relay, layer 3 (L3) relay, or the like. An integrated access and backhaul (IAB) node may be functionally classified as an L3 relay.

Among the relay node types described above, a repeater has a simple structure and operations, so it can be manufactured at low cost and can provide high effects compared to the input cost. A basic type repeater generally does not distinguish between uplink and downlink, and may not perform a beamforming operation either. However, in order to maximize the effects of coverage extension, it may be preferrable for the repeater to support beamforming operations.

On the other hand, as a relay node performing a function similar to the repeater, an intelligent reflecting surface (IRS) is attracting attention. The IRS is a planar type surface having a plurality of passive elements (hereinafter referred to as `IRS elements' or `phase control elements') made of metamaterial, and the IRS elements (or phase control elements) may form a beam having a desired shape by applying phase shift to a received signal, and may reflect or pass the received signal to which the formed beam is applied. The phase shift of each IRS element (or phase control element) may be independently controlled by the base station or TRP. In the present disclosure, the aforementioned beamforming operation may be referred to as `reflection beamforming'. In addition, the formed beam may be referred to as a `reflection beam'. A certain IRS allow signals to pass through the IRS instead of reflecting them. In this case, a signal may pass through each IRS element of the IRS and form a beam while undergoing phase shifts, which may be referred to as `transmissive beamforming'. In addition, the formed beam may be referred to as a `transmissive beam'. Hereinafter, the reflection beamforming and the transmissive beamforming are collectively referred to as reflection beamforming, and the reflection beam and the transmissive beam are collectively referred to as reflection beam. The IRS, like a repeater, provides a relay function capable of beamforming only with a simple structure and operations, so it can be used for a purpose similar to the repeater. The IRS may also be referred to as a `reflecting intelligent surface (RIS)' or the like.

The present disclosure proposes cell coverage extension methods using a relay node, in particular, a repeater and IRS. The proposed methods may be applied to both communication using the repeater and IRS, and may be easily applied to communication using other types of relay nodes. In addition, the proposed methods may be applied to a TDD system and a frequency division duplex (FDD) system. Hereinafter, a repeater may refer to an IRS or another type of relay node, and an IRS may refer to a repeater or another type of relay node. In addition, a relay node may be an implementation form of a terminal, and may be regarded as a terminal. Alternatively, a relay node may be an implementation form of a base station, and may be regarded as a base station. In the present disclosure, a link between a base station and a repeater (or IRS, relay node, etc.) may be referred to as a backhaul link, fronthaul link, control link, or the like, and a link between a base station and a terminal may be referred to as a Uu link, Uu interface, or the like, and a link between a repeater (or IRS, relay node, etc.) and a terminal may be referred to as an access link. Alternatively, a link between a repeater (or IRS, relay node, etc.) and a terminal may be referred to as a Uu link or Uu interface without distinction from the link between the base station and the terminal. Hereinafter, the link between the base station and the repeater (or IRS, relay node, etc.) will be collectively referred to as a backhaul link or control link depending on a situation, and the link between the repeater (or IRS, relay node, etc.) and the terminal will be collectively referred to as an access link. Physical signals and channels used in the Uu link or Uu interface (e.g., the signals and channels described above) may be equally used in the access link, backhaul link, and/or control link.

Meanwhile, a relay node may be composed of a plurality of entities. Each entity may perform its own function for relay communication. For example, a repeater may include a first entity and a second entity. The first entity may perform a function of exchanging control information (e.g., side control information) with the base station. The first entity may be referred to as a `mobile termination (MT)' or a `repeater MT'. The first entity may perform communication for exchanging the above-described control information with the base station through the above-described control link. In addition, the first entity may control operations (e.g., signal relaying operations) of the second entity based on the control information. The control link may be the Uu link or Uu interface.

The second entity may perform a function of relaying signals from the base station to the terminal or from the terminal to the base station. The second entity may be referred to as `forwarding (Fwd)' or `repeater Fwd'. The signal relaying operation may be performed through the above-described backhaul link and access link. The operations (e.g., signal relaying operations) of the second entity may be controlled by the control information (e.g., side control information) received from the base station. For example, the operations of the second entity may be controlled by the first entity constituting the same repeater based on the control information received from the base station.

The control link (or Uu link) and the backhaul link may use the same frequency band (e.g., the same carrier, the same bandwidth part, the same frequency region, or the like). In this case, a control link transmission beam and a control link reception beam of the relay node may respectively coincide with a backhaul link transmission beam and a backhaul link reception beam of the relay node, or they may have a QCL relationship, respectively. For example, a QCL source or QCL reference signal that determines the backhaul link reception beam (or spatial QCL or TCI) may be a downlink signal or channel (e.g., SSB, TRS, CSI-RS, CORESET, etc.) of the control link. Conversely, a QCL source or QCL reference signal that determines the control link reception beam (or spatial QCL or TCI) may be a downlink signal or channel of the backhaul link. In addition, a reference signal or QCL source that determines the backhaul link transmission beam (or spatial relation or TCI) may be a downlink signal or channel (e.g., SSB, TRS, CSI-RS, CORESET, etc.) of the control link or an uplink signal or channel of (e.g., PRACH, SRS, PUCCH, etc.) of the control link. Conversely, a reference signal or QCL source that determines the control link transmission beam (or spatial relation or TCI) may be a downlink signal or channel of the backhaul link, or an uplink signal or channel of the backhaul link. Alternatively, the control link (or Uu link) and the backhaul link may be formed in different frequency bands (e.g., different carriers, different bandwidth parts, different frequency regions, or the like). In this case, the QCL relationship may not be established between the control link transmission/reception beams of the relay node and the backhaul link transmission beam/reception beams of the relay node. The relay node may receive information indicating a beam of the backhaul link from the base station, and may determine the transmission beam and/or reception beam of the backhaul link based on the information.

Based on the above relationship, the backhaul link transmission beam mentioned in the following exemplary embodiments may be regarded as the control link (or Uu link) transmission beam even if there is no separate description, and the backhaul link reception beam mentioned in the following exemplary embodiments may be regarded as the control link (or Uu link) reception beam even if there is no separate description.

The above-described configuration of the repeater consisting of the plurality of entities may be applied to all exemplary embodiments below. In the exemplary embodiments, even if not otherwise stated, an operation in which the repeater transmits and receives a control signal to and from the base station may be considered to be performed by a specific entity (e.g., the first entity) of the repeater, and an operation in which the repeater relays a signal between the base station and the terminal may be considered to be performed by another specific entity (e.g., the second entity) of the repeater.

### [Beamforming operation]

FIG. 3 is a conceptual diagram illustrating a first exemplary embodiment of a beamforming operation method using a repeater.

Referring to FIG. 3, a base station (or TRP) and a terminal may transmit/receive signals using a plurality of beams. In addition, a repeater may be disposed between the base station and the terminal, and the repeater may relay signals between the base station and the terminal using a plurality of beams. In the case of downlink transmission, the repeater may receive a downlink signal from the base station by applying reception beamforming to a backhaul link (or control link) that is a link between the base station and the repeater, and transmit a downlink signal to the terminal through an access link by applying transmission beamforming to the downlink signal. In the case of uplink transmission, the repeater may receive an uplink signal from the terminal by applying reception beamforming to the access link, and may transmit an uplink signal to the base station through a backhaul link (or control link) by applying transmission beamforming to the uplink signal.

The terminal (e.g., first terminal (1^{st} UE)) may be connected to the repeater through an access link, and may communicate with the base station through relaying of the repeater. Alternatively, another terminal (e.g. second terminal (2^{nd} UE)) may be directly connected to the base station through an access link to perform communication with the base station. Alternatively, a certain terminal may communicate with the base station using both a relay link through the repeater and a direct link with the base station. In the present disclosure, unless otherwise stated, the terminal may mean a terminal having the above-described link(s). Meanwhile, although it is assumed that only one repeater performs relaying operations between the base station and the terminal in the exemplary embodiment of FIG. 3, exemplary embodiments of the present disclosure may also be applied to a case in which a plurality of repeaters perform relaying operations between the base station and the terminal (i.e., multi-hop scenario). In the multi-hop scenario, radio interfaces between the relay nodes (e.g., repeaters, IRSs, etc.) may be referred to as backhaul links, backhaul interfaces, control links, or the like. For example, the transmission operation between the base station and the relay node of the exemplary embodiments may be regarded as a transmission operation between a first relay node and a second relay node. In addition, the transmission operation between the relay node and the terminal according to the exemplary embodiments may be regarded as a transmission operation between the first relay node and the second relay node.

The transmission beam and reception beam of the repeater may be controlled by the base station. For downlink transmission, the base station may transmit information on a backhaul reception beam and/or an access link transmission beam and information indicating to apply the same to the repeater. In addition, for uplink transmission, the base station may transmit information on an access link reception beam and/or a backhaul transmission beam and information indicating to apply the same to the repeater. The information may be transmitted to the repeater through a signaling procedure. In the present disclosure, the signaling procedure may include physical layer signaling (e.g., DCI, PDCCH, etc.), RRC signaling (or semi-static signaling equivalent thereto), MAC signaling (e.g., MAC CE or signaling equivalent thereto), a combination of the above signaling, or the like.

The backhaul reception beam of the repeater may be determined based on quasi-co-location (QCL) information or TCI state information transmitted from the base station to the repeater. For example, the repeater may receive, from the base station, a downlink signal such as a control channel (e.g., PDCCH), data channel (e.g., PDSCH), DM-RS, CSI-RS, tracking reference signal (TRS), SSB, phase tracking-reference signal (PT-RS), or positioning reference signal (PRS). In this case, the repeater may receive, from the base station, information on a QCL source having a QCL relationship with the downlink signal (or DM-RS corresponding thereto) and information on QCL parameter(s) (e.g., QCL type, spatial QCL, spatial reception parameter, QCL type D, etc.) of the QCL relationship, and may receive the downlink signal based thereon. For example, the QCL source may be SSB, CSI-RS, TRS, or the like that the repeater receives from the base station. As described above, the downlink signal or QCL source may be transmitted through the control link.

In addition, the backhaul transmission beam of the repeater may be determined based on spatial relation information, uplink QCL information, uplink TCI state information, and/or the like transmitted from the base station to the repeater. For example, the repeater may transmit, to the base station, an uplink signal such as PUCCH, PUSCH, DM-RS, PRACH, SRS, or PT-RS. In this case, the repeater may receive, from the base station, information on a signal source (e.g., QCL source) having a QCL relation or spatial relation with the uplink signal (or DM-RS corresponding thereto) and/or information on QCL parameters (e.g., QCL type, spatial QCL, spatial relation information, spatial transmission parameter, QCL type D, etc.) of the QCL relationship or spatial relation, and may transmit the uplink signal based thereon. The signal source (e.g., QCL source) may be an SSB, CSI-RS, TRS, SRS, PRACH, or the like. As described above, the uplink signal or signal source (e.g., QCL source) may be transmitted through the control link.

The method described above may be referred to as (Method 100). (Method 100) may also be used to determine an access link transmission beam or an access link reception beam of the repeater. According to (Method 100), based on the reference signal (e.g., SSB, CSI-RS, TRS, or the like) received by the repeater from the base station, the repeater may determine a beam (e.g., beam, precoder, reception filter coefficients, etc.) by itself. That is, the repeater may determine the access link transmission beam or the access link reception beam by using the information on the QCL source/QCL parameter(s) on the backhaul reception beam and the information on the QCL source/QCL parameter(s) on the backhaul transmission beam. However, it may be preferable for the access link beams of the repeater to be determined by the base station. In addition, there may not be a QCL source having a QCL relationship with the access link beam of the repeater or a reference beam to be used for determining the access link beam of the repeater.

In order to solve the above-described problem, a codebook may be used for controlling the access link transmission beam and the access link reception beam of the repeater. A codebook may consist of one or more entries or codewords, and each codeword (or entry) may correspond to a candidate beam or a candidate precoder (or a candidate reception filter) applied to a signal that the repeater transmits to the terminal (or a signal that the repeater receives from the terminal) through the access link. When a transmission (or reception) signal s of the repeater is expressed as *M* × 1 vector and a transmission (or reception) signal *x* to which beamforming or precoding (or reception filter) is applied is expressed as *N* × 1 vector in the spatial domain, each codeword may be expressed as *N* × M matrix (or *M* × *N* matrix). M may correspond to the number of layers or data streams of the transmission (or reception) signal of the access link, and *N* may correspond to the number of transmission (or reception) antenna ports of the access link. In general, each element of the *N* × *M* matrix may be a complex number. In an exemplary embodiment, *M*=1. That is, a single stream signal may be transmitted (or received), and in this case, each codeword of the codebook may be expressed as *N* × 1 vector. In the case of a reception codebook, dimensions of the vector and the matrix may be appropriately changed. For example, each codeword of the reception codebook may be expressed as *M* × *N* matrix or 1 × *N* vector.

The codebooks may be predefined in the technical specification. A plurality of codebooks may be defined, and the codebooks may be defined for each dimension (e.g., *M, N,* etc.) of the access link transmission/reception signal of the repeater. Alternatively, the size or dimension of the codebook may be determined by the dimension (e.g., *M, N*, etc.) the access link transmission/reception signal. Information on the codebooks, for example, the size or dimension of the codeword, number of codewords (or oversampling coefficient), codebook type, transmission direction (e.g., downlink or uplink), and/or the like may be predefined in the technical specifications. In addition, the codewords may be predefined in technical specifications. For example, the codewords may be defined as (oversampled) discrete Fourier transform (DFT) vectors (i.e., columns of a (oversampled) DFT matrix). Alternatively, at least a portion of the information on the codebook may be transmitted from the base station to the repeater through a signaling procedure (e.g., DCI, PDCCH, MAC CE or signaling equivalent thereto, RRC message or signaling equivalent thereto, and/or the like).

Alternatively, at least a portion of the information on the codewords or the codebooks may be preconfigured in the repeater. That is, at least a portion of information on candidate beams applied to the repeater may be pre-configured to the repeater. As an example of the pre-configuration, some information (or parameters) used to perform communication may be stored in advance in the communication node (e.g., repeater, IRS, terminal). In the present disclosure, unless otherwise stated, 'configuration' may mean configuration by a signaling procedure between the communication nodes in some cases, pre-configuration not by a signaling procedure, or both.

The base station may select or determine a codebook in consideration of the dimension of the access link transmission/reception signal, the number of transmission layers, the number of antennas or antenna ports, the transmission direction, and the like of the repeater. The base station may select one codeword (or a plurality of codewords) from the determined codebook, and may signal information on the selected codeword(s) to the repeater. For example, the base station may notify the repeater of index(es) (or beam index(es)) of the selected codeword(s). For example, the signaling may be dynamic signaling (e.g., DCI, PDCCH, physical layer signaling, MAC CE transmitted from the base station to the repeater, etc.). The repeater may determine the access link transmission beam or access link reception beam based on the information on the codeword(s) (e.g., codeword index(es), beam index(es)) received from the base station. The above-described beam indication method using the codebook may correspond to a method of explicitly signaling beam information. The method described above may be referred to as (Method 110). (Method 110) may also be used to determine the backhaul transmission beam or the backhaul reception beam of the repeater.

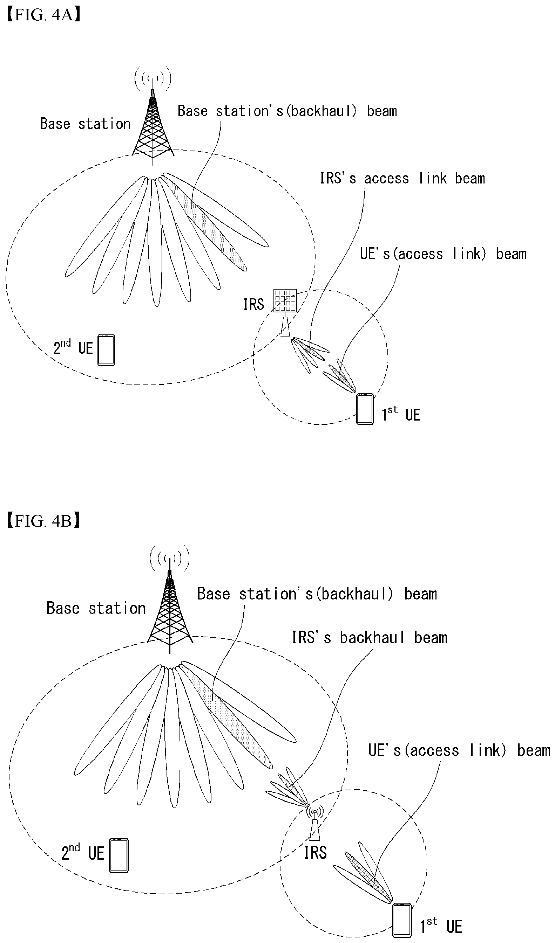

FIG. 4A is a conceptual diagram illustrating a first exemplary embodiment of a beamforming operation method using an IRS, and FIG. 4B is a conceptual diagram illustrating a second exemplary embodiment of a beamforming operation method using an IRS.

Referring to FIGS. 4A and 4B, a base station (or TRP) and a terminal may transmit/receive signals using a plurality of beams. In addition, an IRS (or RIS) may be disposed between the base station and the terminal, and the IRS (or RIS) may relay signals between the base station and the terminal using a plurality of beams. In the case of downlink transmission, reflection beamforming by the IRS may be applied to a downlink signal transmitted by the base station to be received by the terminal. When the IRS is regarded as an operating subject, the IRS may receive the downlink signal from the base station, and may transmit a downlink signal to which the reflection beamforming is applied to the terminal by applying the reflection beamforming to the received downlink signal. In the case of uplink transmission, reflection beamforming by the IRS may be applied to an uplink signal transmitted by the terminal to be received by the base station. That is, the IRS may receive the uplink signal from the terminal, and may transmit an uplink signal to which the reflection beamforming is applied by applying the reflection beamforming to the received uplink signal to the base station.

The reflection beam of the IRS may be controlled by the base station. Since the reflection beam of the IRS is formed by phase shifts by the IRS elements, controlling the reflection beam of the IRS may mean controlling phase shift values (or phase values, phase control values) of the IRS elements. The base station may transmit information on the reflection beam and information indicating to apply the same to the IRS. The information may be transmitted to the IRS through a signaling procedure.

As described above, the information for controlling the reflection beam of the IRS may include phase shift values of the IRS elements. When the number of IRS elements is *L,* the base station may inform the IRS of information on *L* phase shift values {ϕ₁, ϕ₂, ..., ϕ*_{L}*} (*L* is a natural number). Alternatively, the same phase shift value may be applied to a plurality of IRS elements, and in this case, the base station may inform the IRS of information on fewer than *L* phase shift values. For example, each phase shift value may be a real number greater than or equal to 0 and less than 2π. A signal received at the IRS elements may be expressed as a vector y=[y₁ y₂ ... y*_{L}*] of a size of 1 × *L* in which case a 1 × *L* signal vector reflected (or passed through) by the IRS may be expressed as s=[ s₁ s₂ ... s*_{L}*]=[e^{jϕ1} e^{jϕ2} ... e^{jϕ*L*}]*o*[ y₁ y₂ ... y*_{L}*]. Here, `o' may mean a Hadamard product or an element-wise product. That is, a signal received by the i-th IRS element may be transmitted (e.g., reflected or passed) with a phase of the signal shifted by ϕᵢ. In order to reduce the overhead of control information, quantized phase shift values may be transmitted to the IRS. For example, a range of each phase shift value may be uniformly or non-uniformly quantized, so that each phase shift value may be expressed as one of B values. Each quantized phase shift value may be indicated by, for example, Ceil(log₂(B)) bits to the IRS.

Alternatively, a codebook may be used for controlling the reflection beam of the IRS. The codebook may consist of one or more entries or codewords as in the case of the repeater described above, and each codeword may correspond to a candidate reflection beam of the IRS. When the number of IRS elements is *L,* each codeword may be expressed as *L* × 1 vector, 1 × *L* vector, *L* × *L* diagonal matrix, or the like, and may be referred to as a phase control vector, phase control matrix, or the like. Alternatively, the same phase shift value may be applied to a plurality of IRS elements, and in this case, the size or dimension of each codeword may be smaller than the above-described size or dimension of the codeword. For example, when the phase shift values of the IRS elements are {ϕ₁, ϕ₂, ..., ϕ*_{L}*}, each codeword may be defined as R*[e^{jϕ1} e^{jϕ2} ... e^{jϕ*L*}], R*[e^{jϕ1} e^{jϕ2} ... e^{jϕ*L*}]^{T}, R*diag(e^{jϕ1}, e^{jϕ2}, ..., e^{jϕ*L*}). Here, R may be a constant for power conservation, for example, R=1 or R=1/sqrt(L). In addition, sqrt(A) may mean a square root of A, B^{T} may mean a transpose of a matrix B, and diag(a, b) may mean a diagonal matrix having a and b as diagonal elements.

As described above, the codebook may be predefined in the technical specification. A plurality of codebooks may be defined, and the codebooks may be defined according to the number of IRS elements. Information on the codebooks, for example, the size or dimension of the codeword, number of codewords, codebook type, transmission direction (e.g., downlink or uplink), and/or the like may be predefined in the technical specifications. In addition, the codewords may be predefined in technical specification. Alternatively, at least a portion of the information on the codebooks may be transmitted from the base station to the IRS through a signaling procedure (e.g., DCI, PDCCH, MAC CE or signaling equivalent thereto, RRC message or signaling equivalent thereto, and/or the like.). Alternatively, at least a portion of the information on the codewords or codebooks may be pre-configured in the IRS. That is, at least a portion of information on candidate phase shift values or candidate beams applied to the IRS may be transmitted from the base station to the IRS or may be pre-configured in the IRS.

The base station may select or determine a codebook in consideration of the number of IRS elements of the IRS, the transmission direction, and the like. The base station may select one codeword (or a plurality of codewords) from the determined codebook, and may signal information on the selected codeword(s) to the IRS. For example, the base station may inform the IRS of the index(es) (e.g., beam index(es)) of the selected codeword(s). For example, the signaling may be dynamic signaling (e.g., DCI, PDCCH, physical layer signaling, MAC CE transmitted from the base station to the IRS). The IRS may determine a reflection beam (e.g., uplink reflection beam, downlink reflection beam) based on the information (e.g., codeword index(es), beam index(es)) on the codeword (s) received from the base station.

The above-described codebook may be used by the relay node to determine the access link transmission beam, reception beam, reflection beam, and the like. In the case of the repeater, a codebook (e.g., downlink codebook, a set of candidate transmission beam(s), etc.) for downlink transmission of the access link and a codebook (e.g., uplink codebook, a set of candidate reception beam(s), etc.) for uplink transmission of the access link may be individually defined or configured in the repeater. The access link transmission beam of the repeater may be determined by one codeword (or beam) of the downlink codebook (or a set of candidate transmission beam(s)), and the access link reception beam of the repeater may be determined by one codeword (or beam) of an uplink codebook (or a set of candidate reception beam(s)). Alternatively, the same (or common) codebook (or a set of candidate beam(s)) may be applied to downlink transmission and uplink transmission of the access link. Each of the access link transmission beam and the access link reception beam of the repeater may be determined by one codeword (or beam) of the same (or common) codebook. In addition, when the access link transmission beam and the access link reception beam correspond to each other, they may correspond to the same codeword (or the same beam) or the same codeword index (or the same beam index).

A beam (or precoder, reception filter, etc.) of the relay node may be equally applied to the entire operating frequency range of the relay node. That is, the beam of the relay node may be a wideband beam. In this case, the above-described beam-related information (e.g., codeword index, beam coefficients, or phase shift values, etc.) may be single information applied to the entire frequency range (e.g., the entire frequency range in which the relay node operates). In this case, the relay node may perform beamforming operations without considering frequency domain resource allocation. Alternatively, the beam (or precoder, reception filter, etc.) of the relay node may be applied for each subband. That is, the beam of the relay node may be a narrowband beam. In this case, the above-described beam-related information (e.g., codeword index, beam coefficients, phase shift values, etc.) may be indicated to the relay node for each subband. Each subband may be a set of RBs. For example, a subband may be a set of RBG(s), a set of precoding resource group(s) (PRG(s)), a carrier, a bandwidth part, a set of RBs separated by intra-carrier guard band(s), or the like. Each subband may consist of contiguous RBs. Also, wideband beam-related information and narrowband beam-related information may be transmitted together to the relay node. The narrowband beam-related information may be determined based on the wideband beam-related information.

In the present disclosure, a physical signal or channel may be referred to as a signal for convenience. Also, a signal may be classified into a plurality of categories. Hereinafter, unless otherwise stated, 'signal' may mean a signal according to one of categories to be described later.

The first category signal may be a signal transmitted for a relay node (e.g., repeater or IRS). The first category signal may be transmitted through a control link between a base station and the relay node (e.g., repeater or MT entity of repeater). Alternatively, the first category signal may be transmitted through a backhaul link between the base station and the relay node (e.g., repeater or MT entity of repeater). For example, the first category signal may include a PDCCH, PUCCH, or the like including control information for indicating an operation of the relay node. The first category signal may not need to be transmitted to a terminal (e.g., terminal connected to the relay node). Accordingly, the first category signal may not be transmitted through an access link. That is, the relay node may not relay the first category signal to the terminal. Alternatively, the relay node may relay the first category signal to the terminal. For example, the relay node may relay all received signals to the terminal or to the base station without distinction of categories of the signals. Even when the relay node transmits the first category signal to the terminal, the terminal may not receive the first category signal.

Alternatively, the relay node may not relay the first category signal to the terminal when a predetermined condition is satisfied, and otherwise relay the first category signal to the terminal. The predetermined condition may include a condition that the first category signal does not overlap in time with another signal (e.g., signal to be relayed to the terminal, second category signal, etc.). That is, when the first category signal does not overlap with another signal (e.g., signal other than the first category signal) in the same symbol(s), the relay node may not perform the operation of transmitting the first category signal to the terminal. Alternatively, on the contrary, the relay node may relay the first category signal to the terminal when the predetermined condition is satisfied, otherwise, the relay node may not relay the first category signal to the terminal.

The second category signal may be a signal transmitted for a terminal (e.g., terminal connected to the relay node) or a terminal-specific signal. The second category signal may be transmitted through a backhaul link between the base station and the relay node (e.g., repeater or forwarding entity of repeater) or a control link between the base station and the relay node (e.g., repeater, MT entity of repeater), and may be transmitted through an access link between the relay node and the terminal. That is, the relay node may relay the second category signal from the base station to the terminal or from the terminal to the base station. The relay node may be a repeater, a forwarding entity of the repeater, or the like. The second category signal may include the above-described physical signals and channels on the access link. In addition, the second category signal may include a signal for beam management of the terminal. The access link beam applied to the second category signal may be a terminal-specific beam (or, precoder, reception filter, etc.).

The third category signal may be a signal transmitted to provide a coverage area of a relay node. The third category signal may be transmitted through a backhaul link or a control link between the base station and the relay node, and may be transmitted through an access link between the relay node and the terminals. The relay node may be a repeater, a forwarding entity of the repeater, or the like. The third category signal may be a signal transmitted (e.g., broadcast) for a plurality of terminals or unspecified terminals within a coverage area. For example, the third category signal may be repeatedly transmitted based on beam sweeping. For example, the third category signal may be transmitted for beam management of the terminal and may include an SSB, CSI-RS, PRS, SRS, and the like. The access link beam applied to the third category signal may be a cell-specific beam (or precoder, reception filter, etc.), a common beam, a beam predetermined by cell planning, or the like.

The relay node may relay all signal(s) mapped to symbol(s) to which the second category signal and/or the third category signal received from the terminal are mapped to the base station. In addition, the relay node may relay all signal(s) mapped to symbol(s) to which the second category signal and/or the third category signal received from the base station are mapped to the terminal. The transmission/reception operation of the relay node for the second category signal and the transmission/reception operation of the relay node for the third category signal may not be distinguished.

The fourth category signal may be a signal in which a relay node is not involved. An operation in which the relay node transmits or receives the fourth category signal may not be defined in the technical specification. The fourth category signal may be transmitted through a Uu interface or a direct link between the base station and the terminal. The fourth category signal may include the above-described physical signals and channels on the Uu interface.

The relay node (e.g., repeater or IRS) may receive a signal (e.g., third category signal) for beam management of the terminal from the base station and relay it to the terminal, or receive the signal from the terminal and relay it to the base station. To this end, some beamforming operations required for the relay node will be described with reference to exemplary embodiments below.

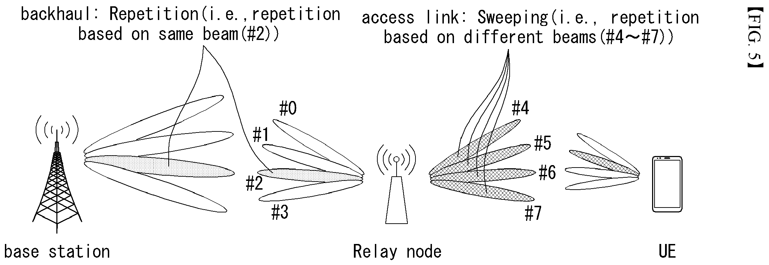

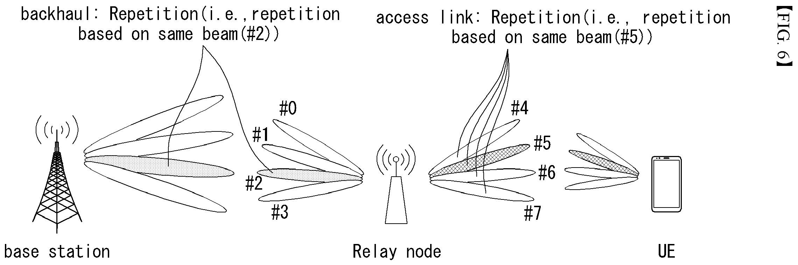

FIG. 5 is a conceptual diagram illustrating a first exemplary embodiment of a beamforming operation method of a relay node for beam management of a terminal, and FIG. 6 is a conceptual diagram illustrating shows a second exemplary embodiment of a beamforming operation method of a relay node for beam management of a terminal.

Referring to FIGS. 5 and 6, a base station, relay node, and terminal (UE) may transmit signals using a plurality of beams. The relay node may use four beams, i.e., beam #0, beam #1, beam #2, and beam #3, for backhaul transmission with the base station, and may use four beams, that is, beam #4, beam #5, beam #6, and beam #7, for access link transmission with the terminal.

Referring to FIG. 5, a certain signal (e.g., third category signal) may be repeatedly transmitted over the entire coverage area of the relay node by multiple beams. In this case, the signal may be repeatedly transmitted by the same beam (or the same spatial QCL assumption, the same TCI, the same spatial relation) through the backhaul link, and repeatedly transmitted (i.e., may be beam-swept) by a plurality of beams (or a plurality of spatial QCL assumptions, a plurality of TCIs, a plurality of spatial relationships) through the access link. For example, a downlink signal may be repeatedly transmitted Kd times (in Kd resources) using the same beam (e.g., beam #2) from the base station to the relay node, and the downlink signal may be repeatedly transmitted (i.e., relayed) Kd times (in Kd resources) using a plurality of beams (e.g., beams #4 to #7) from the relay node to terminals within the coverage area. For example, the above-described operation may be used to transmit SSB or CSI-RS within the coverage of the relay node. The resources for the repeated transmissions (e.g., Kd resources) may be SSB resources or CSI-RS resources. In an exemplary embodiment, Kd may be 4. For another example, the relay node may repeatedly receive or monitor an uplink signal in Ku resources using a plurality of beams (e.g., beams #4 to #7) from terminal(s), and may repeatedly transmit the uplink signal Ku times to the base station using the same beam (e.g., beam #2). For example, the above-described operation may be used to receive PRACH or SRS from terminals within the coverage of the relay node. The resources (e.g., Ku resources) for the repeated transmissions may be PRACH resources or SRS resources. In an exemplary embodiment, Ku may be 4. The Kd resources or the Ku resources may be arranged in different symbol sets (or slot sets). That is, the Kd resources or the Ku resources may not overlap in time. Alternatively, at least a portion of the Kd resources or the Ku resources may be mapped to the same symbol(s). The beamforming operation may be indicated by the base station to the relay node. For example, an access link transmission beam applied to each time period (e.g., symbol(s)) in which a plurality of SSBs and/or a plurality of CSI-RSs are transmitted through the access link may be indicated by the base station to the relay node.

Referring to FIG. 6, a certain signal (e.g., second category signal) may be repeatedly transmitted from the relay node to the terminal through the same beam. In this case, the signal may be repeatedly transmitted through the same beam (or the same spatial QCL assumption, the same TCI, or the same spatial relation) through the backhaul link and the access link, respectively. For example, the downlink signal may be repeatedly transmitted Kd times (in Kd resources) using the same beam (e.g., beam #2) from the base station to the relay node, and the downlink signal may be repeatedly transmitted Kd times (in Kd resources) through the same beam (e.g., beam #5) from the relay node to the terminal. For example, the above-described operation may be used for a purpose of repeatedly transmitting SSB(s) or CSI-RS(s) when updating the reception beam of the terminal. In an exemplary embodiment, Kd may be 4. As another example, the uplink signal may be repeatedly transmitted Ku times (in Ku resources) by using the same beam (e.g., beam #5) from the terminal to the relay node, and the uplink signal may be repeatedly transmitted Ku times (in Ku resources) by using the same beam (e.g., beam #2) from the relay node to the base station. For example, the above-described operation may be used for a purpose of repeatedly receiving SRS(s) when updating the transmission beam of the terminal. In an exemplary embodiment, Ku may be 4. The beamforming operation may be indicated by the base station to the relay node. For example, an access link reception beam applied to each time period (e.g., symbol(s)) in which a plurality of SRSs are transmitted through the access link may be indicated by the base station to the relay node.

In the above exemplary embodiments, the beam of the relay node may be indicated by the methods described above. For example, the backhaul beam of the relay node may be indicated by the base station to the relay node based on QCL information, TCI state information, and/or the like by (Method 100). In addition, the access link beam of the relay node may be indicated by the base station to the relay node based on a codebook, coefficients or phase values for beamforming, and/or the like by (Method 110).

### [Backhaul beam management]

To determine an optimal backhaul beam (e.g., reception beam, transmission beam, beam pair), a relay node (e.g., repeater or IRS) may receive a signal (e.g., SSB or CSI-RS) from a base station, may measure a strength (e.g., RSRP, L1-RSRP) of the received signal, and report the measurement value to the base station. The signal reception operation and the operation of reporting the measurement value to the base station may be performed through a control link, and the signal strength measurement operation may be performed by a specific entity (e.g., MT entity of repeater) constituting the relay node.

For example, the relay node may measure received signal strengths of SSBs in a plurality of SSB resources, determine one SSB (or a plurality of SSBs) based thereon, and receive the determined one SSB (or, plurality of SSBs). In addition, an initial backhaul beam of the relay node may be determined based on the determined SSB. That is, the determined SSB may be used as a QCL source (or reference beam, default beam) for the relay node to receive a downlink signal or transmit an uplink signal in the backhaul. The SSBs may be transmitted from the base station to the relay node through a control link (or Uu link). The relay node may receive or transmit signals other than the SSBs by using a reception beam used to receive the determined SSB as an initial beam or a serving beam. In addition, the determined SSB (or SSB resource, beam corresponding to the SSB) may be reported from the relay node to the base station based on an association relationship between the SSB and a PRACH resource. The relay node may transmit a PRACH in PRACH resource(s) (or PRACH occasion(s)) associated with the determined SSB resource. The base station may identify the SSB (or SSB resource, beam corresponding to the SSB) determined by the relay node by successfully receiving the PRACH from at least some of the PRACH resource(s), and then perform a subsequent signal transmission operation with the relay node based thereon. The PRACH may be transmitted from the relay node to the base station through the control link (or Uu link).

Alternatively, a downlink signal other than the SSB may be used for determining the initial backhaul beam of the relay node. For example, the relay node may perform the above-described initial beam determination operation based on a PSS, SSS, CSI-RS, PRS, PDCCH, or the like transmitted from the base station. In addition, an uplink signal other than the PRACH may be used for determining the initial backhaul beam of the relay node. For example, the relay node may perform the above-described implicit beam reporting operation based on an SRS, PUCCH, or the like. Since the signals can be transmitted by occupying fewer physical resources than the SSB or PRACH, overhead according to beam management may be reduced. Downlink signals (or downlink resources corresponding thereto) other than the SSB and uplink signals (or uplink resources corresponding thereto) other than the PRACH may be associated with each other, respectively, and the terminal may report the initial beam to the base station by transmitting the uplink signal in the uplink resource associated with the downlink resource determined as the initial beam. The downlink signals other than the SSB (or downlink resources corresponding thereto) and the uplink signals other than the PRACH (or uplink resources corresponding thereto) may be transmitted through the control link (or Uu link), and as described above, may be transmitted in a frequency band other than the frequency band in which the backhaul link or the access link operates (e.g., a carrier bandwidth or a bandwidth part configured in the terminal).

Configuration information of the downlink resource, configuration information of the uplink resource, and information on the association relationship between the downlink resource and the uplink resource may be transmitted from the base station to the relay node. The information may be indicated to the relay node through a signaling procedure (e.g., physical layer signaling (e.g., PDCCH, DCI), RRC signaling or signaling equivalent thereto, MAC CE or signaling equivalent thereto, etc.). The relay node may generate an uplink signal such as PRACH, SRS, or PUCCH, and the uplink signal may be generated based on the configuration information received from the base station. In addition, the relay node may map the generated uplink signal such as PRACH, SRS, and PUCCH to an uplink resource, and may transmit the uplink signal in the uplink resource. The operation of generating the uplink signal may include operations such as channel encoding, interleaving, modulation, and DM-RS generation. In addition, the operation of measuring the received signal strength of the downlink signal may be performed based on the configuration information received from the base station.

As described above, the backhaul beam of the relay node may be determined by the control link beam of the relay node. When the downlink reception of the backhaul link and the downlink reception of the control link are performed at the same time (e.g., in the same symbol), the reception beam of the backhaul link may be the same as the reception beam of the control link (i.e., QCL relationship may be established therebetween), and the transmission beam of the backhaul link may be identical to the transmission beam of the control link (i.e., QCL relationship may be established between each other). Otherwise, the reception beam of the backhaul link may be determined as one reception beam of the control link (e.g., default reception beam), and the transmission beam of the backhaul link may be determined as one of the transmission beams of the control link (e.g., default transmission beam). The default reception beam of the control link may mean a PDCCH reception beam of the control link (e.g., reception beam of CORESET, QCL, TCI, etc.). Specifically, the PDCCH reception beam of the control link may mean a reception beam (e.g., QCL or TCI) of a specific CORESET (e.g., CORESET with the lowest ID) in a specific slot (e.g., the latest slot in which a PDSCH has been received). Alternatively, the default reception beam of the control link may mean a PDSCH reception beam (e.g., QCL or TCI) of the control link. Specifically, the PDSCH reception beam of the control link may mean one TCI among TCI(s) constituting a TCI pool (or TCI state pool) for a PDSCH of the control link or one TCI among activated TCI(s). The default transmission beam of the control link may mean a PUCCH transmission beam (e.g., spatial relation, TCI) or a PUSCH transmission beam (e.g., spatial relation, TCI) of the control link.

Alternatively, the backhaul beam of the relay node may be independent from or have low correlation with the control link beam of the relay node, and may be indicated or configured to the relay node through separate signaling from the base station. For example, the reception beam of the backhaul link may be indicated or configured to the relay node with one or more TCI(s) belonging to a TCI pool of the control link or the backhaul link (e.g., downlink TCI pool or joint uplink/downlink TCI pool). Similarly, the transmission beam of the backhaul link may be indicated or configured to the relay node with one or more TCI(s) belonging to a TCI pool of the control link or the backhaul link (e.g., uplink TCI pool or joint uplink/downlink TCI pool). According to the above-described method, the reception beam of the backhaul link may be different from the reception beam of the control link, and the transmission beam of the backhaul link may be different from the transmission beam of the control link. When different beams of the backhaul link and the control link collide at the same time (e.g., the same symbol), the relay node may select one of the different beams, and may perform a transmission/reception operation of the control link and/or the backhaul link based on the selected beam.

While the relay node determines or changes the backhaul beam, the relay node may not perform transmission/reception for the access link. For example, the relay node may not perform access link transmission with the terminal while performing the operation of acquiring the initial beam (or SSB, SSB resource) of the backhaul. The relay node may perform access link transmission with the terminal after acquiring the backhaul initial beam or when receiving a response signal (or message) from the base station after reporting the backhaul initial beam to the base station. For example, the relay node may perform an access link transmission operation after a predetermined time (e.g., symbol(s) or slot(s)) from a time point (e.g., symbol or slot) of receiving the response signal from the base station. For example, the response signal may be Msg2, Msg4, MsgB, or a message equivalent thereto. The response signal may be transmitted from the base station to the relay node on a control channel (e.g., PDCCH) or a data channel (e.g., PDSCH).

For another example, when determining that a beam failure has occurred with respect to the backhaul beam, the relay node may not perform or stop access link transmission with the terminal. For example, the relay node may identify a new valid beam and perform a beam failure recovery procedure based thereon, and may resume the access link transmission with the terminal after completing the beam recovery procedure. When the relay node receives a response signal (or message) to a beam recovery request or beam change request from the base station, the relay node may consider that the beam recovery procedure has been successfully completed, and may perform the access link transmission operation after a predetermined time (e.g., symbol(s) or slot(s)) from a time point (e.g., symbol or slot) of receiving the response signal. A more specific operation for the beam failure and beam recovery of the relay node will be described later.

As described above, the relay node may not perform the signal transmission operation with the terminal. That is, the relay node may not perform a signal relaying operation from the base station to the terminal or a signal relaying operation from the terminal to the base station (hereinafter, this is referred to as a 'non-relaying operation'). The above-described non-relaying operation may be performed for a predetermined time period. A period in which the relay node performs the non-relaying operation may be referred to as a 'non-relaying period'. Also, the operation may be regarded as a partial on-off operation (or a partial off operation) of the relay node. Power consumption of the relay node may be reduced in the non-relaying period. As described above, the relay node may perform the signal transmission operation, signal monitoring operation, or the like with the base station in the non-relaying period. For example, the relay node may receive a corresponding signal or channel from the base station or transmit it to the base station in order to perform operations such as backhaul beam measurement, change, management, and the like of the backhaul beam in the non-relaying period. In addition, the relay node (e.g., repeater, MT entity of repeater) may monitor a CORESET, search space set, PDCCH monitoring occasion, and/or the like to receive a PDCCH (or relay (R)-PDCCH, etc.) transmitted from the base station. In addition, the base station may transmit indication information for controlling the operation of the relay node in the non-relaying period to the relay node (e.g., repeater or MT entity of repeater), and the relay node (e.g., repeater or MT entity of repeater)) may transmit a HARQ-ACK to the base station in response to a signal received from the base station or transmit other control information to the base station in the non-relaying period.

The relay node may determine the non-relaying period, the operation of the relay node in the non-relaying period, whether or not the relay node performs operations in the non-relaying period, and/or the like by an implicit scheme or an explicit scheme.

As an example of the implicit scheme, as described above, the relay node may stop (or pause) or restart (or resume) a signal transmission operation with the terminal through the access link based on the operation of transmitting or receiving a specific signal to or from the base station. Alternatively, the relay node may stop (i.e., not perform) a signal transmission operation with the terminal through the access link for a predetermined time period based on the operation of transmitting or receiving a specific signal to or from the base station. The operation of transmitting or receiving a specific signal to or from the base station may include an operation of receiving a signal (e.g., SSB, CSI-RS) for beam quality measurement and/or reporting from the base station, an operation of receiving a signal indicating beam measurement and/or reporting from the base station (e.g., physical layer control information, DCI, higher layer message, RRC signaling or semi-static signaling equivalent thereto, MAC CE or dynamic higher layer signaling equivalent thereto, etc.), an operation of receiving a signal indicating that a beam failure has been recovered, an operation of transmitting a response signal to the received signal to the base station, and/or the like.

In addition, the operation of the relay node transmitting or receiving a specific signal to or from the base station may include an operation of the relay node receiving information indicating or configuring a slot format from the base station. The relay node may determine a transmission direction of symbols to be downlink, uplink, or flexible according to the slot format configuration or indication information. The relay node may perform the non-relaying operation in symbol(s) determined as flexible symbol(s). That is, the relay node may omit or not perform a transmission/reception operation of the access link in a period configured or indicated by the base station as a flexible period. According to the above-described method, the non-relaying operation of the relay node may be performed in units of a symbol or symbol group. That is, the relay node may switch from the relaying operation to the non-relaying operation or from the non-relaying operation to the relaying operation according to a boundary of a symbol or symbol group.

The base station may designate arbitrary symbol(s) as flexible symbols. Alternatively, only symbol(s) satisfying a predetermined condition may be allowed to be designated as flexible symbol(s), and other symbol(s) may be designated as downlink or uplink symbol(s). For example, symbol(s) including a specific downlink signal (e.g., SSB) or a specific uplink signal (e.g., PRACH) may be configured or indicated as flexible symbol(s). For another example, symbol(s) including the first category signal may be configured or indicated as flexible symbol(s).

The flexible symbol may be used for downlink transmission or uplink transmission by a dynamic indication (e.g., DCI of the backhaul or control link, SCI) from the base station. That is, the flexible symbol may be overridden or converted to a downlink symbol or an uplink symbol. The flexible symbol may be a symbol determined as a flexible symbol by RRC configuration from the base station or a static/semi-static configuration equivalent thereto. The relay node may perform the non-relaying operation in the remaining symbol(s) that are not dynamically indicated as downlink or uplink symbols among the symbol(s) configured as flexible symbols.

As an example of the explicit scheme, the base station may transmit information instructing the relay node not to perform or to stop the signal transmission operation with the terminal to the relay node. In addition, the base station may transmit information instructing the relay node to perform or resume the signal transmission operation with the terminal to the relay node. Alternatively, the base station may transmit information instructing the relay node not to perform the signal transmission operation with the terminal for a predetermined time period (e.g., non-relaying period) to the relay node. The relay node may receive the indication information from the base station, and may or may not perform the signal relaying operation based thereon. The indication information may be transmitted from the base station to the relay node through a signaling procedure (e.g., physical layer control information, DCI, higher layer message, RRC signaling or semi-static signaling equivalent thereto, MAC CE or higher layer dynamic signaling equivalent thereto, etc.). For example, the indication information may be transmitted from the base station to the relay node through the control link (or Uu link).

Specifically, the indication information may include at least one of information on a start time (e.g., start slot, start symbol, etc.) of the non-relaying period, information on an end time (e.g., end slot, end symbol, etc.) of the non-relaying period, information on a position (e.g., slot index(es) and/or symbol index(es), etc.) of the non-relaying period, information on a duration (e.g., the number of slot(s) and/or the number of symbol(s), or an absolute time value (e.g., A ms or B us)) of the non-relaying period, or a combination thereof. For example, the indication information may include only the information (e.g., start slot, start symbol, etc.) on the start time of the non-relaying period, and the relay node may not perform the signal relaying operation for a predefined time period or a time period pre-configured by the base station form the indicated start time.

The time point at which the relay node performs the operation of stopping or resuming the access link signal transmission operation may be a time point after a predetermined time (e.g., a predetermined number of slot(s) or symbol(s), or a number of slot(s) or symbol(s) set by the base station) from the time point (e.g., one symbol of a reception slot, reception symbol(s), transmission slot, or transmission symbol(s)) at which the signal is received from the base station or the signal is transmitted to the base station, or may be a time point thereafter. The predetermined time may include a time required for the relay node to process a signal received from the base station, or a time required for the base station to process a signal received from the relay node.

On the other hand, the relay node may not perform both the signal transmission operation of the backhaul link and the signal transmission operation of the access link. The above-described operation may be referred to as an off operation (or deactivation operation or turn-off operation). The off operation may be performed for a predetermined time period. Alternatively, the off operation may be continuously performed (e.g., as a default operation of the relay node) until a separate indication from the base station is received. The off operation of the relay node may be distinguished from the above-described non-relaying operation (i.e., partial off operation). The relay node may be indicated by the base station to perform the off operation for the predetermined time period. Alternatively, the relay node may be selectively indicate to perform one of the off operation and the non-relaying operation (i.e., partial off operation). The indication information therefor may be transmitted from the base station to the relay node by the above-described signaling scheme. Similarly to the above-described non-relaying operation, the off operation may also be indicated to the relay node by an explicit scheme or an implicit scheme. A period in which the off operation is performed may be configured as a set of slot(s) and/or a set of symbol(s), and configuration information thereof may be signaled from the base station to the relay node. For example, the off operation may be performed in symbol(s) and/or slot(s) configured as flexible symbol(s) by slot format configuration. Even while the off operation of the relay node is being performed, the relay node may transmit and receive signals to and from the base station. For example, while a forwarding entity of a repeater performs the off operation, an MT entity of the repeater may perform transmission/reception operation with the base station through the control link. The base station may transmit information instructing the relay node (e.g., MT of repeater) to stop (or, start or resume) the off operation or the non-relaying operation. For example, the MT entity of the repeater node may instruct a forwarding entity of the repeater to stop the off operation or the non-relaying operation based on the indication information, and the forwarding entity may start or resume the relaying operation based on the indication.

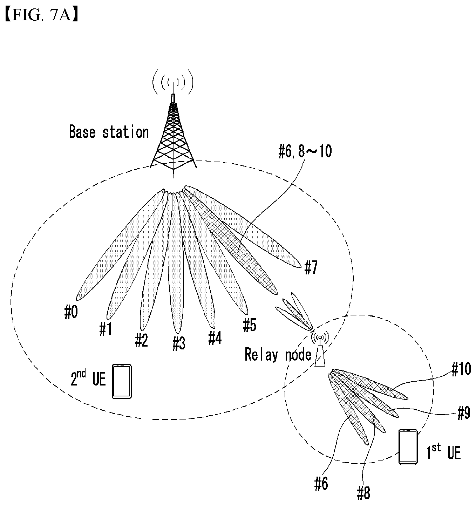

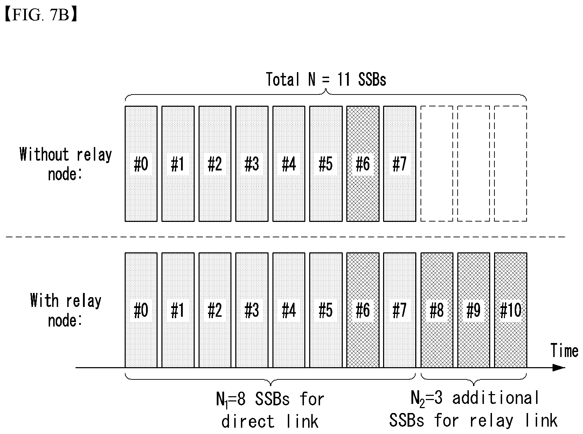

FIGS. 7A and 7B are conceptual diagrams illustrating a first exemplary embodiment of multi-beam-based SSB transmission and SSB resource allocation.

Referring to FIGS. 7A and 7B, a base station may repeatedly transmit SSBs using multiple beams. For example, the base station may repeatedly transmit the SSBs 8 times using 8 (=N1) beams (e.g., beams #0 to #7) for a direct link. The direct link may be formed between the base station and a terminal (e.g., second terminal (2^{nd} UE)) or between the base station and a relay node. In this case, a relay node (e.g., repeater or IRS) may be disposed. The relay node may receive an SSB based on a specific beam (e.g., beam #6) from the base station, and relay the received SSB to terminals (e.g., first terminal (1^{st} UE)) within its coverage area. For example, the relay node may repeatedly receive the SSB 4 (=N2) times based on the specific beam (e.g., beam #6), and may relay the 4 SSBs receive through four beams (e.g., beams #6, #8, #9, and #10) to the access link.

According to the above exemplary embodiment, the number of repeated transmissions of the SSB may be increased to support the beamforming or beam sweeping operation of the relay node. For example, if there is no relay node, the base station may transmit the SSB 8 (=N1) times, and if there is a relay node, the base station may transmit the SSB 11 (=N1+N2) times. Accordingly, the number of required SSB resources may also increase from 8 to 11.

As a method for increasing the number of SSB resources, a method of increasing the length of an SSB transmission frame (or SSB burst period, SSB burst set period, SSB resource set) may be considered. The SSB transmission frame may mean a time period in which SSB resources are mapped within one resource period, and may also be referred to as an SSB transmission window. For example, the SSB transmission frame may be 5 ms and the SSB resources may be arranged within the 5 ms. As another example, the SSB transmission frame may be defined or configured as A1 consecutive slots, A2 consecutive subframes, A3 consecutive radio frames, or the like. In the above exemplary embodiment, the SSB transmission frame including 11 (=N1+N2) SSB resources may be longer than the SSB transmission frame including 8 (=N1) SSB resources. SSB transmission frames of different lengths may be defined or configured, and the SSB transmission frame may be extended to have a longer length or reduced to have a shorter length. Extension or reduction of the SSB transmission frame may be indicated from the base station to the relay node or the terminal through a signaling procedure.

Alternatively, a plurality of SSB transmission frames (or a plurality of SSB bursts or corresponding periods, a plurality of SSB burst sets or corresponding periods, and a plurality of SSB resource sets) may be arranged. For example, 8 (=N1) SSB resources may be arranged in the first SSB transmission frame, and 3 (=N2) SSB resources may be arranged in the second SSB transmission frame. The lengths of the first SSB transmission frame and the second SSB transmission frame may be different from each other. The first SSB transmission frame and the second SSB transmission frame may be arranged in different time resources. That is, SSB resources included in the first SSB transmission frame may not overlap in time with SSB resources included in the second SSB transmission frame. N1 and/or N2 may be predefined in the technical specification, or may be set from the base station to the relay node or the terminal. The period (or periodicity) of the first SSB transmission frame and the second SSB transmission frame may be the same, and the first SSB transmission frame and the second SSB transmission frame may appear in each period. Alternatively, the period (or periodicity) of the first SSB transmission frame and the second SSB transmission frame may be generally different from each other.

Additionally or alternatively to the method described above, SSB resources may be arranged in a plurality of frequency positions (or frequency regions). For example, the plurality of SSB transmission frames may be arranged in different frequency region. The plurality of SSB transmission frames (or SSBs belonging thereto) may not overlap each other in the frequency domain. For example, the plurality of SSB transmission frames may be temporally overlapped in a specific time period, and may be arranged in different frequency region in the overlapping time period. The plurality of SSB transmission frames (or SSBs belonging thereto) may be mapped to the same symbol(s) and transmitted simultaneously.

Information on the above-described SSB resource arrangement may be transmitted from the base station to the relay node and/or the terminal through a signaling procedure. For example, the information may be transmitted through an RRC signaling procedure (or higher-layer semi-static signaling equivalent thereto). For example, the information may be included in an SIB, and the SIB may be transmitted to the relay node or the terminal as being included in a cell-specific message.

Referring again to FIGS. 7A and 7B, the relay node may regard a transmission direction of symbols to which the SSB is mapped as downlink, and may relay a signal received in the symbols to which the SSB is mapped to the terminal. In this case, the relay node may relay all SSBs to the terminal. Alternatively, the relay node may relay some SSBs to the terminal and may not relay some other SSBs to the terminal. The relay node may regard the transmission direction of the symbols to which the SSB relayed to the terminal is mapped as downlink. On the other hand, the relay node may regard a transmission direction of symbols to which the SSB not relayed to the terminal is mapped as a transmission direction other than downlink (e.g., uplink, flexible, sidelink, etc.), and may perform transmission corresponding to the regarded transmission direction. The relay node may determine the SSBs (or SSB resources) to be relayed to the terminal or the SSBs (or SSB resources) not to be relayed to the terminal based on configuration information received from the base station (e.g., DCI or SCI received through the control link or Uu link). In addition, the relay node may determine the transmission direction of the symbols to which the SSB not to be relayed to the terminal is mapped based on configuration information received from the base station (e.g., DCI or SCI received through the control link or Uu link).

In the first exemplary embodiment of FIGS. 7A and 7B, the relay node may relay all SSBs (e.g., SSBs #0 to #10) to the terminal (e.g., first terminal (1^{st} UE)). Alternatively, the relay node may relay some SSBs (e.g., SSB #6, SSB #8, SSB #9, and SSB #10) to the terminal (e.g., first terminal (1^{st} UE)), and may not relay other SSBs (e.g., SSBs #0 to #5, and SSB #7) to the terminal. The relay node and the terminal (e.g., first terminal (1^{st} UE)) may perform other transmissions (e.g., uplink transmission, sidelink transmission) other than downlink transmission in the symbol(s) to which the SSBs not to be relayed are mapped. At the same time, another terminal (e.g., second terminal (2^{nd} UE)) may receive a downlink transmission from the base station in the symbol(s). That is, a full-duplex communication scheme may be used in the symbol(s). Alternatively, when a predetermined condition is satisfied, the relay node relays the some SSBs (e.g., SSB #6, SSB #8, SSB #9, and SSB #10) to the terminal (e.g., first terminal). For example, when another signal (e.g., downlink signal) is mapped to the symbols to which the some SSB(s) are mapped, the relay node may relay the some SSB(s) to the terminal, and when another signal (e.g., downlink signal) is not mapped to the symbols to which the some SSB(s) are mapped, the relay node may not relay the some SSB(s) to the terminal. The relay node may transmit information on the SSB(s) to be relayed to the terminal (e.g., SSB resource index(es)) or information on the SSB(s) not to be relayed to the terminal (e.g., SSB resource index(es)) from the base station.

The relay node may assume that a QCL relationship is established between some of the SSBs. For example, the relay node may consider that the SSB #6, SSB #8, SSB #9, and SSB #10 have a QCL relationship with each other, and receive the SSBs or measure received signal strength of the SSBs based on the QCL assumption. The SSBs for which the QCL relationship is established with each other may be associated with each other. In addition, the same transmission beam (or spatial relation information, etc.) may be applied to transmission of PRACH resources (or PRACH occasions) associated with the SSBs having the mutual QCL relationship or the SSBs associated each other, and the PRACH resources may be associated with each other. For example, the relay node may be configured with a first PRACH resource (or a first PRACH occasion), and the first PRACH resource (or the first PRACH occasion) may be configured to be associated with a plurality of SSBs (e.g., SSBs). #6, #8, #9, and #10). When one of the plurality of SSBs (e.g., SSBs #6, #8, #9, and #10) is determined as an optimal SSB, the terminal may transmit a PRACH in the first PRACH resource (or, the first PRACH occasion). The QCL relationship may include spatial QCL (or spatial reception parameters, QCL type D, etc.). Also, the QCL relationship may be established for other QCL parameters (e.g., delay spread, Doppler spread, Doppler shift, average gain, average delay, and/or the like). The relay node may determine the above-described QCL relationship or association relationship between the SSBs based on configuration information received from the base station. The SSBs quasi-co-located (QCLed) or associated with each other may be SSBs that the relay node relays from the base station to the terminal. The SSBs QCLed or associated with each other may belong to the same SSB transmission frame. Alternatively, the SSBs QCLed or associated with each other may belong to a plurality of SSB transmission frames. Information on the SSBs (or a set thereof) QCLed or associated with each other may be explicitly configured from the base station to the relay node.

In another exemplary embodiment, the SSBs QCLed with each other (e.g., SSB #6, SSB #8, SSB #9, and SSB #10) may be associated with a plurality of PRACH resources (or a plurality of PRACH occasions). The relay node may repeatedly transmit PRACHs to the base station in the plurality of PRACH resources. As described above, the same transmission beam (or transmission spatial relationship, QCL assumption, or TCI) may be applied to the repeatedly transmitted PRACHs, and the same transmission beam may be formed based on reception beam(s) (or QCL assumption or TCI) of the SSBs associated with the PRACH resources. The uplink coverage of the backhaul link may be extended by the above-described repeated PRACH transmissions. Alternatively, the relay node may select one PRACH resource from among the plurality of PRACH resources and transmit a PRACH to the base station in the selected PRACH resource.

### [Access link beam management]

Access link beams (e.g., transmission beam and reception beam) of the relay node (e.g., repeater or IRS) may be controlled by a base station. The base station may transmit information indicating an access link transmission beam of the relay node, information indicating an access link reception beam, and/or the like to the relay node, and the relay node may determine the access link transmission beam, the access link reception beam, and/or the like based on the information, and may perform a signal transmission/reception operation for the access link by applying the determined beam(s).

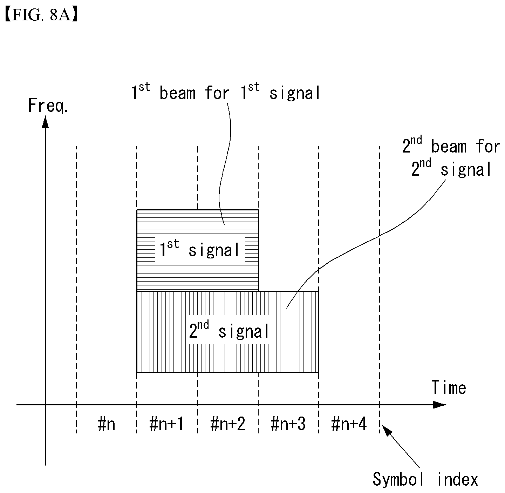

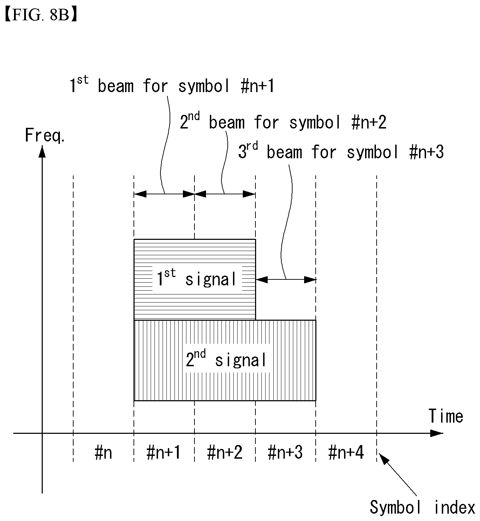

FIG. 8A is a conceptual diagram illustrating a first exemplary embodiment of a method of indicating an access link beam of a relay node, and FIG. 8B is a conceptual diagram illustrating a second exemplary embodiment of a method of indicating an access link beam of a relay node.

Referring to FIGS. 8A and 8B, a plurality of signals (or a plurality of signal resources, a plurality of resources) may be allocated to physical resources (i.e., timefrequency resources). In the present disclosure, `signal', `resource to which the signal is mapped', and 'resource' may be used interchangeably. A first signal may be allocated to a symbol #(n+1) and a symbol #(n+2), and a second signal may be allocated to the symbol #(n+1), the symbol #(n+2), and a symbol #(n+3). For example, the signals may be downlink signals. The symbol #(n+1), symbol #(n+2), and symbol #(n+3) may be downlink symbols or flexible symbols. The relay node may receive the first signal and the second signal from the base station, and may relay them to the terminal. In this case, the base station may control access link transmission beam(s) for the first signal and the second signal of the relay node.

Referring to FIG. 8A, the access link transmission beam of the relay node may be controlled for each signal or for each resource to which each signal is mapped. For example, the relay node may be indicated to apply a first beam to the first signal, and may be indicated to apply a second beam to the second signal. When the first signal and the second signal are mapped to the same symbol(s), the relay node may select one of the first beam and the second beam, and transmit both the first signal and the second signal using the selected beam. When generalizing this, the relay node may select one beam (or a plurality of beams) from among a plurality of beams indicated for the same symbol(s), and transmit all signals of the corresponding symbol(s) by applying the selected beam(s) equally to all the signals of the corresponding symbol(s). Alternatively, the relay node may select one beam (or a plurality of beams) from among the plurality of beams indicated for a plurality of temporally overlapping resources, and transmit signals corresponding to the plurality of resources by applying the selected beam(s) equally to the plurality of resources. The selection of the beam(s) may be determined by a priority between the signals or between the beams. For example, a beam corresponding to a signal having a higher priority may be selected. On the other hand, when the relay node can transmit the first beam and the second beam at the same time, the first signal and the second signal may be transmitted based on the first beam and the second beam, respectively. The method described above may be referred to as (Method 200).

In communication using a direct link between the base station and the terminal, the terminal may assume that the base station determines a transmission beam of the Uu link for each signal. According to (Method 200), since the relay node may also determine the access link transmission beam for each signal, the terminal may apply the same reception operation for reception of a signal (or beam) from the base station and reception of a signal (or beam) from the relay node. However, in order for the relay node to apply a transmission beam for each signal, it may be necessary to know a position of a resource region (or at least a time region (e.g., symbols)) to which each signal is mapped, as well as information on each transmission beam, and thus it may be necessary to receive resource allocation information for each signal from the base station. Alternatively, it may be difficult for the relay node to know resource regions to which signals transmitted to the terminal are mapped, and in this case, the relay node may receive, from the base station, information on the beam and information on the resource region to which the beam is mapped without the resource allocation information of each signal (e.g., time resource and frequency resource). The resource allocation information of each signal may be included in control information for the relay node (e.g., DCI for the relay node) and transmitted to the relay node. In this case, the overhead of control information may greatly increase.

Alternatively, the resource allocation information of each signal may be included in control information transmitted to the terminal (e.g., DCI, RRC signaling, and/or MAC CE for the terminal) and transmitted through a downlink signal (e.g., PDCCH, PDSCH, etc.). In this case, a method in which the relay node receives (i.e., demodulates and/or decodes) the downlink signal (e.g., PDCCH, PDSCH, etc.) for the terminal and obtains the control information may be considered. However, in order to receive the downlink signal, since the relay node needs to know in advance additional information such as carrier or bandwidth part configuration, CORESET resource allocation, ID (e.g., C-RNTI) of the terminal, etc., additional signaling from the base station for this purpose may be necessary, and there is a problem that it may be difficult to maintain the security of the terminal.

Referring to FIG. 8B, the access link transmission beam of the relay node may be controlled and applied for each unit time resource. The unit time resource may be K1 symbol(s), K2 slot(s), or the like (K1 and K2 are natural numbers). For example, the access link transmission beam of the relay node may be controlled for each symbol. In addition, when the relay node can transmit a plurality of beams in the same symbol, the relay node may be indicated to transmit a signal by applying a plurality of access link beams to a certain symbol. In this case, information on a frequency region to which each of the plurality of access link beams is applied may be indicated to the relay node. Referring to FIG. 8B, the relay node may be indicated to apply the first beam, the second beam, and the third beam to the symbol #(n+1), symbol #(n+2), and symbol #(n+3), respectively. The beam(s) indicated for each symbol may be commonly applied to all signals transmitted in the corresponding symbol. Accordingly, the first signal may be transmitted by the first beam and the second beam in two symbols, respectively, and the second signal may be transmitted by the first beam, the second beam, and the third beam in the three symbols, respectively. The first beam, the second beam, and the third beam may be the same or different from each other. The method described above may be referred to as (Method 210).

When (Method 210) is used, the relay node may apply the same access link transmission beam to a plurality of temporally overlapping resources to transmit signals corresponding thereto, or apply the same access link reception beam to the same to receive signals corresponding thereto. Accordingly, the terminal (e.g., first terminal) may transmit or receive the corresponding signals by applying the same beam(s) (e.g., the same spatial QCL(s), the same reception beam(s), the same transmission beam(s), the same transmission/reception beam pair(s)), and may expect that the base station configures the terminal to apply the same beam(s) as described above. That is, the terminal may not expect to be configured to transmit and receive signals by applying different beams (e.g., different spatial QCLs, different reception beams, different transmission/reception beam pairs, etc.) to a plurality of temporally overlapping resources. The terminal may be indicated or configured to perform the above-described operation from the base station. Alternatively, as described above, when the relay node has an ability to transmit or receive a plurality of access link beams in the same time resource, the terminal may transmit or receive a plurality of beams (e.g., a plurality of spatial QCLs, a plurality of reception beams, a plurality of transmission/reception beam pairs, a plurality of TCIs, etc.) to a plurality of temporally overlapping resources. For example, if the relay node has the ability to transmit and receive up to two access link beams in the same time resource, the terminal may also transmit and receive signals using up to two beams in the same time resource (e.g., the same symbol(s)). That is, the number of beams that the terminal can simultaneously transmit or receive in the same time resource may be determined by the number of beams that the relay node can simultaneously transmit or receive in the same time resource. The terminal may receive the number (or the maximum value) of the beams that the relay node can transmit or receive simultaneously in the same time resource from the base station. Alternatively, the number of beams that the relay node can simultaneously transmit or receive in the same time resource may be determined by the number of beams that the terminal can transmit or receive simultaneously in the same time resource. The relay node may receive the number (or the maximum value) of beams that the terminal can transmit or receive simultaneously in the same time resource from the base station.

Beam indication information (e.g., access link beam indication information) may be transmitted from the base station to the relay node through a signaling procedure. For example, the beam indication information may be configured to the relay node through semi-static signaling (e.g., RRC signaling or higher-layer semi-static signaling equivalent thereto) or dynamic signaling (e.g., MAC CE or higher-layer dynamic signaling equivalent thereto), and may be transmitted on a control channel (e.g., PDCCH, R-PDCCH, etc.) or a data channel (e.g., PDSCH, relay (R)-PDSCH), etc.) for the relay node. As another example, the beam indication information may be included in control information (e.g., DCI, relay (R)-DCI, side control information (SCI), etc.) for the relay node, and may be transmitted on a control channel (e.g., PDCCH, R-PDCCH, etc.) or a data channel (e.g., PDSCH, R-PDSCH), etc.) for the relay node. For example, the beam indication information may be included in a payload of a DCI format 2_X (where X is 0, 1, 2, ...) and an SCI format and transmitted to the relay node. The relay node may monitor a CORESET, a PDCCH search space, a PDCCH monitoring occasion, etc. (or PDCCH candidates belonging thereto) in order to receive the DCI or DCI format including the beam indication information. The CORESET, PDCCH search space, PDCCH monitoring occasion, etc. may be configured from the base station to the relay node by the above-described method. The above-described beam indication information may be transmitted from the base station to the relay node (e.g., repeater or MT of repeater, etc.) through the control link or Uu link. For example, the MT entity of the repeater may instruct the forwarding entity to perform an access link transmission/reception beamforming operation based on the beam indication information.

The beam indication information (e.g., access link beam indication information) may include information on a time period to which the beam indication information is applied, beam information for the time period, and the like. The time period may be slot(s). For example, the beam indication information may include beam information corresponding to each symbol (or each symbol group) belonging to the time period, and information on each beam may include a codeword index of a codebook, information on coefficients or phase values of the beam, and the like, as described above. In this case, the number of beam information may coincide with the number of symbols (or the number of symbol groups) belonging to the time period. The relay node may receive information on a time granularity to which the beam indication information is applied, that is, a time unit (e.g., symbol or symbol group) to which each beam indication information is applied, from the base station. In addition, the beam indication information may further include information on a frequency region (e.g., RBs, subband, RB set, bandwidth part, carrier, etc.) to which the beam indication information is applied. At least a part of the above-described information may be transmitted from the base station to the relay node by semi-static signaling (e.g., RRC signaling or signaling equivalent thereto). For example, the number of slots K3 included in the time period to which the beam indication information is applied may be set semi-statically. The relay node may consider that the beam indication information included in DCI is for K3 slots. In addition, the relay node may determine the size of a field of the DCI (or R-DCI, SCI, etc.) including the beam indication information based on the length of the time period, and monitor the DCI (or R-DCI, SCI, etc.) in accordance therewith.

In addition, the duration of the above-described time period, symbol, etc. may be determined by a specific numerology (e.g., reference numerology). Here, the numerology may mean a subcarrier spacing. Alternatively, the numerology may mean a subcarrier spacing and a CP length. The specific numerology (e.g., reference numerology) may be configured to the relay node through semi-static signaling, or may be indicated to the relay node as being included in the DCI. The information on the reference numerology may be included in slot format information or transmitted together with the slot format information (e.g., as being included in the same DCI (format) as the slot format information). In addition, the above-described beam indication information may be included in the slot format information or transmitted together with the slot format information (e.g., as being included in the same DCI (format) as the slot format information). Alternatively, the relay node may be configured with a carrier and/or bandwidth part from the base station, and one of numerology(s) (or subcarrier spacing(s)) used in the carrier or bandwidth part may be determined as the reference numerology (or reference subcarrier spacing). For example, the duration of the time period, symbol, etc. may be determined based on the smallest subcarrier spacing among the subcarrier spacing(s) configured in the carrier or bandwidth part(s) configured in the relay node. Alternatively, the duration of the time period, symbol, etc. may be determined based on a subcarrier spacing of a carrier or bandwidth part activated (or indicated to be activated) in the relay node.

The relay node may transmit or receive a plurality of signals belonging to a plurality of carriers or a plurality of bandwidth parts simultaneously (e.g., in the same time period). The plurality of carriers or the plurality of bandwidth parts may have the same numerology (or subcarrier spacing and/or CP length). That is, the relay node may not expect to be configured with or indicated to activate a plurality of carriers or a plurality of bandwidth parts having different numerologies (or different subcarrier spacings and/or CP lengths). The operation of the relay node may be limited to the same frequency band. That is, the relay node may expect configuration based on different numerologies (or different subcarrier spacings and/or CP lengths) for a plurality of carriers or a plurality of bandwidth parts belonging to different frequency bands. Alternatively, irrespective of the frequency band, the plurality of carriers or the plurality of bandwidth part may have different numerologies (or subcarrier spacings and/or CP lengths), and symbol durations corresponding thereto may also be different from each other. The relay node may simultaneously transmit or receive symbols having different durations (in different frequency regions), and transmit or receive signals by applying the same or different beams to the signals mapped to the symbols having different durations.

Although the access link transmission beam for downlink transmission is considered in the above exemplary embodiments, the above-described methods (e.g., (Method 200) and (Method 210)) are not limited thereto, and may also be applied to control of the access link reception beam for uplink transmission. In addition, the above-described methods (e.g., (Method 200) and (Method 210)) may also be applied to control of the backhaul beam (e.g., transmission beam and reception beam) of the relay node. In this case, the access link beam, the access link transmission beam, and the access link reception beam in the above exemplary embodiments may be interpreted as the backhaul beam, the backhaul transmission beam, and the backhaul reception beam, respectively. The base station may transmit backhaul beam indication information to the relay node according to the above-described methods. Different beam indication methods may be applied for backhaul beam control and access link beam control. For example, the backhaul beam control may be performed by (Method 200), and the access link beam control may be performed by (Method 210).

### [Beam failure recovery]

When a quality of a beam for CORESET or PDCCH reception is deteriorated, the terminal may determine a beam failure. When a beam failure occurs, it may be difficult for the terminal connected to the relay node to know in which link among the backhaul link and the access link the beam failure occurs. Therefore, the terminal may perform a beam failure determination procedure and a beam recovery procedure according to the same method without distinguishing between a case in which the terminal is directly connected to the base station and a case in which the terminal is connected to the relay node. A beam failure recovery request signal (e.g., PRACH or PUCCH) of the terminal and a response signal (e.g., PDCCH) of the base station thereto may be relayed by the relay node between the terminal and the base station.

Meanwhile, the relay node may determine a beam failure when a quality of a beam of the backhaul link (or control link or Uu link) is deteriorated. When the relay node has a higher layer protocol layer (e.g., MAC layer, RRC layer, etc.), a beam failure determination procedure and/or beam recovery procedure of the relay node may be performed in a physical layer and a higher layer of the relay node. On the other hand, when the relay node does not have a higher layer protocol layer (e.g., MAC layer, RRC layer, etc.), the beam failure determination procedure and/or beam recovery procedure may be performed in the physical layer of the relay node.

Similarly to the terminal, the relay node may monitor CORESET(s) (or PDCCH search space set(s), PDCCH monitoring occasion(s)), CORESET(s) for the relay node (e.g., relay (R)-CORESET(s)), or control channel transmission resource(s) equivalent thereto. In this case, signal(s) (e.g., SSB or CSI-RS) QCLed with a DM-RS of the CORESET(s) or the control channel transmission resource(s) equivalent thereto (or, DM-RS for demodulation of PDCCH candidates included in the CORESET(s)), or signal(s) explicitly configured by the base station, which are equivalent thereto, may be referred to as a first signal set. When a beam quality (e.g., RSRP, L1-RSRP, hypothetical PDCCH BLER, etc.) of all signal(s) belonging to the first signal set (or a first signal set corresponding to a specific TRP) is less than or equal to a first reference value, the relay node may determine a beam failure. When a beam failure occurs, the relay node may measure a beam quality (e.g., RSRP, L1-RSRP, hypothetical PDCCH BLER, etc.) of signals (e.g., SSB or CSI-RS) belonging to a second signal set (or, a second signal set corresponding to a specific TRP), and determine signal(s) having a beam quality equal to or greater than a second reference value as a new beam candidate(s). The signal(s) of the second signal set may be configured from the base station to the relay node.

The relay node may explicitly or implicitly report information on the new candidate beam(s) (e.g., resource index(es), SSB index(es), or CSI-RS resource index(es) corresponding thereto) to the base station, thereby requesting beam failure recovery. The information may be transmitted on a PRACH (e.g., relay (R)-PRACH)), PUCCH (e.g., relay (R)-PUCCH)), or the like. For example, the relay node may transmit an uplink signal (e.g., PRACH) in an uplink resource (e.g., PRACH resource, PRACH occasion) associated with the new candidate beam(s), and the base station may identify the new candidate beam(s) determined by the relay node by successfully receiving the uplink signal in the uplink link resource. Alternatively, the information may be included in an MAC CE or a higher layer message equivalent thereto. For example, the information may be transmitted to the base station on a PUSCH. The information on the new candidate beam(s) may be transmitted to the base station through the control link or Uu link. In this case, the entity transmitting the information may be a repeater (e.g., MT entity of the repeater). Alternatively, information on the new candidate beam(s) may be transmitted to the base station through the backhaul link. In this case, the entity transmitting the information may be a repeater (e.g., forwarding entity of the repeater).

The relay node may monitor a response signal to the beam failure recovery request. For example, the response signal may be a PDCCH (e.g., R-PDCCH) and may be transmitted through a CORESET (e.g., CORESET or R-CORESET configured for a beam failure recovery procedure). When the relay node performs the CORESET monitoring operation, it may be assumed that a DM-RS of the PDCCH is QCLed with a signal corresponding to the new candidate beam(s) (e.g., a corresponding signal belonging to the second signal set). The response signal may be transmitted to the relay node through the control link or Uu link. In this case, the entity receiving the response signal may be a repeater (e.g., MT entity of the repeater). Alternatively, the response signal may be transmitted to the relay node through the backhaul link. In this case, the entity receiving the response signal may be the repeater (e.g., forwarding entity of the repeater).

The above-described backhaul beam failure detection and beam recovery procedure of the relay node may take a predetermined time. While the above procedure is being performed, the terminal may transmit a beam failure recovery request signal and may not receive a response message from the base station (or relay node) due to deterioration of the backhaul link quality. In this case, the terminal may determine a radio link failure (RLF) for the corresponding serving cell, and may initiate cell re-search, handover procedure, and the like. As a result, the terminal may not be able to communicate with the serving cell for a predetermined time.

As a method for solving the above problem, the base station (or relay node) may inform the terminal of information on the backhaul beam failure. The information on the backhaul beam failure may include information indicating that the backhaul beam failure has occurred, and information on a time (e.g., slots, subframes) required to recover from the backhaul beam failure. In addition, the information on the backhaul beam failure may include information instructing the terminal not perform the beam failure recovery procedure, PDCCH monitoring operation, and other transmission or reception operations for a predetermined time, or information instructing the terminal to suspend or delay the procedure and operations. In this case, the information may be implicit information rather than information notifying the backhaul beam failure explicitly. Alternatively, as described above, the base station (or relay node) may inform the terminal of information indicating that the relay node is not to perform a signal relaying operation (i.e., information indicating that the relay node is to perform a non-relaying operation), information on a non-relaying period, and the like, and the terminal may not perform a transmission operation or a reception operation for a predetermined time period based on the information. Alternatively, the base station (or the relay node) may explicitly instruct the terminal not to perform a transmission operation or a reception operation for a predetermined time period. Within the predetermined time period, the terminal may not perform a measurement operation for determining a beam failure, RLF, or the like, or may ignore the performed measurement operation.

### [Timing alignment and control signaling]

The relay node (e.g., repeater or IRS) may receive information on a slot format from the base station by the above-described method, and may determine a transmission direction of each symbol belonging to a slot based thereon. The information on the slot format may be configured or indicated to the relay node by semi-static signaling, dynamic signaling, and/or the like. In this case, the backhaul beam and the access link beam of the relay node may be switched from a transmission beam to a reception beam or from a reception beam to a transmission beam according to the transmission direction of the symbol(s). As described above, the beam may mean a precoder, a reception filter, a spatial QCL, or an assumption of spatial transmission/reception parameters, and/or the like. In this case, the beam switching operation may need to be performed in alignment with a symbol boundary. To this end, the relay node may determine a downlink reception timing and an uplink transmission timing, and may perform the signal transmission operation and the beam switching operation based thereon. The relay node may determine a downlink timing (e.g., symbol timing, slot timing, radio frame timing, etc.) based on reception of a downlink signal (e.g., SSB, CSI-RS, TRS, etc.). The downlink signal may be a downlink signal of the backhaul link (or, control link or Uu link). The relay node may perform the switching operation between a transmission beam and a reception beam for each of the backhaul link (or, control link or Uu link) and the access link according to the determined symbol timing, that is, a symbol boundary. In addition, the relay node may determine an uplink timing based on a timing advance (TA) received from the base station. The relay node may determine a time point earlier by the TA than the downlink timing as an uplink signal transmission timing, and may transmit an uplink signal according to the determined timing. The downlink timing and the uplink timing may be for transmission/reception of the backhaul link (or, control link or Uu link).

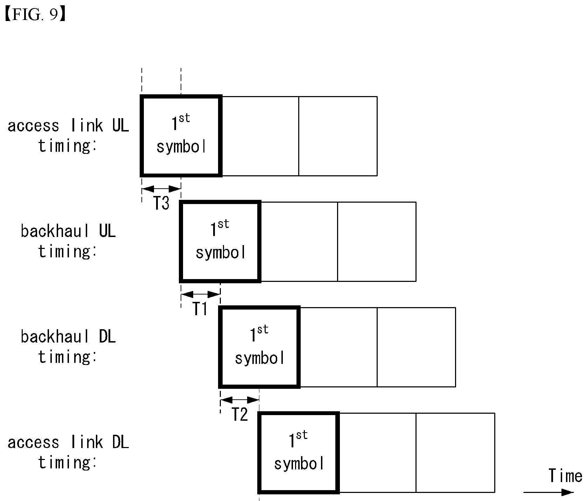

FIG. 9 is a conceptual diagram illustrating a first exemplary embodiment of a method for determining a transmission timing of a relay node.

Referring to FIG. 9, a relay node may receive a downlink signal from a base station through a backhaul link (or control link) and determine a downlink timing of the backhaul link (or control link). The relay node may determine an access link downlink timing based on the downlink timing of the backhaul link (or control link), and transmit a signal through the access link based on the determined access link downlink timing. For example, the access link downlink timing may be later by T2 than the downlink timing of the backhaul link (or control link). T2 may include a time delay required for the relay node to relay a downlink signal (e.g., a time delay of a signal reception unit, a signal transmission unit, etc.). T2 may typically have a value greater than or equal to 0. In some cases, T2 may be a negative number, and accordingly, the access link downlink timing of the relay node may precede the downlink timing of the backhaul link (or control link).

T2 may be arbitrarily determined by the relay node. Alternatively, T2 may be determined by the base station and may be transmitted from the base station to the relay node. A time delay from a time point at which the relay node receives the downlink signal to a time point at which the relay node transmits the received downlink signal or a time value corresponding thereto (e.g., t2) may be defined as the capability of the relay node. The relay node may report the capability to the base station. The base station may determine T2 based on the capability received from the relay node. For example, T2 may be determined to be greater than or equal to t2.

In addition, the relay node may determine a backhaul link (or control link) uplink timing (fronthaul UL timing) based on the downlink timing of the backhaul link (or control link), and may transmit a backhaul link (or control link) uplink signal base on the determined backhaul link (or control link) uplink timing. For example, the backhaul link (or control link) uplink timing may be ahead of the backhaul link (or control link) downlink timing by T1. Alternatively, the backhaul link (or control link) uplink timing may be ahead of the access link downlink timing by T1. T1 may include a propagation delay time between the base station and the relay node. T1 may typically have a value greater than or equal to 0. In some cases, T1 may be a negative number, and accordingly, the backhaul link (or control link) uplink timing of the relay node may be later than the backhaul link (or control link) downlink timing. Alternatively, T1 may be a negative number, and the backhaul link (or control link) uplink timing of the relay node may be later than the access link downlink timing. T 1 may correspond to a TA of the relay node. T1 may be determined by the base station and may be transmitted from the base station to the relay node. The base station may determine T1 based on a reception timing of a signal (e.g., SRS) received from the relay node.

Since the relay node receives an uplink signal from the terminal and relays it to the base station, the access link uplink timing of the relay node may precede the backhaul link (or control link) uplink timing. For example, the access link uplink timing of the relay node may be ahead of the backhaul link (or control link) uplink timing by T3. Alternatively, the access link uplink timing of the relay node may be ahead of the backhaul link (or control link) downlink timing or the access link downlink timing by T3. T3 may include a time delay required for the relay node to relay an uplink signal (e.g., a time delay of a signal reception unit, a signal transmission unit, etc.). T3 may typically have a value greater than or equal to 0. In some cases, T3 may be a negative value, and accordingly, the access link uplink timing of the relay node may be later than the backhaul link (or control link) uplink timing.

T3 may be arbitrarily determined by the relay node. Alternatively, T3 may be determined by the base station and may be transmitted from the base station to the relay node. A time delay from a time point at which the relay node receives an uplink signal to a time point at which the relay node transmits the received uplink signal or a time value (e.g., t3) corresponding thereto may be defined as the capability of the relay node. The relay node may report the capability to the base station. The base station may determine T3 based on the capability received from the relay node. For example, T3 may be determined to be greater than or equal to t3. In an exemplary embodiment, T3 = T2. In addition, t3 = t2. In this case, the capability related to the uplink timing and the capability related to the downlink timing may be defined as one capability.

The base station may determine a TA of the terminal (e.g., the first terminal) in consideration of the timing difference (e.g., T1, T2, T3, etc.), and may indicate the TA to the terminal. For example, the TA of the terminal may be determined to be greater than or equal to T1+T2+T3. Therefore, as described above, it is important for the base station to know the transmission timing (e.g., T2, T3, t2, t3, etc.) of the relay node.

As described above, the base station may transmit control information for controlling the operation of the relay node to the relay node. The control information may be transmitted to the relay node through a semi-static signaling procedure (e.g., an RRC signaling procedure or a higher layer semi-static signaling procedure equivalent thereto). Alternatively, the control information may be transmitted to the relay node through a dynamic signaling procedure (e.g., a dynamic signaling procedure by an MAC CE or a higher layer dynamic signaling procedure equivalent thereto). Additionally or alternatively, the control information may be referred to as DCI (e.g., R-DCI), SCI, downlink side control information (DSCI), fronthaul control information (FCI), or the like, and may be transmitted on a control channel (e.g., PDCCH or R-PDCCH), data channel (e.g., PDSCH or R-PDSCH), reference signal (e.g., CSI-RS), or the like in form or a DCI format (e.g., R-DCI format), SCI format, DSCI format, or the like. In case that the relay node performs a random access operation, the relay node may receive the DCI format before performing the random access operation. For example, the DCI format may be transmitted through a Type 3 PDCCH CSS set (or a search space set equivalent thereto), CORESET #0 (or a CORESET equivalent thereto), or the like. When RRC states and RRC state transition for the relay node are defined, the relay node may perform a PDCCH monitoring operation for receiving the DCI format in an RRC idle state, and may receive the DCI format.

The DCI (e.g., R-DCI) may include the above-described slot format information, the above-described beam information or beam indication information, information indicating an on/off operation of the relay node, information indicating the above-described non-relaying operation (or information indicating a partial on-off operation), and the like. The relay node may perform a corresponding operation based on the information. In order for the base station to identify whether the DCI has been successfully transmitted, the relay node may transmit a HARQ-ACK to the base station in response to the DCI (or PDCCH or PDSCH). The HARQ-ACK reported by the relay node to the base station may include only ACK information. Alternatively, the HARQ-ACK reported by the relay node to the base station may include ACK/NACK information. A link adaptation technique may be applied to transmission of a physical channel or a physical signal including the DCI. To this end, the relay node may calculate CSI of the backhaul link, and may report the calculated CSI to the base station. The CSI may be calculated based on reception of a backhaul downlink signal (e.g., CSI-RS, SSB, etc.). The CSI may include a channel quality indicator (CQI), a precoding matrix indicator (PMI), a rank indicator (RI), a layer indicator (LI), a CSI-RS resource indicator (CRI), a beam indicator (BI), and/or the like.

In addition, the relay node may transmit, to the base station, control information helpful for the base station to control its operations. The control information may be referred to as UCI, SCI, uplink side control information (USCI), FCI, or the like, and may be transmitted on a control channel (e.g., PUCCH, R-PUCCH), data channel (e.g., PUSCH, R-PUSCH), reference signal (e.g., SRS), or the like. Alternatively, the control information may be included in a MAC CE, RRC message, or message equivalent thereto, and may be transmitted to the base station on a control channel (e.g., PUCCH or R-PUCCH), data channel (e.g., PUSCH or R-PUSCH), reference signal (e.g., SRS), or the like. The control information may include the above-described HARQ-ACK, scheduling request (SR), CSI, the above-described beam failure recovery request message, an uplink beam quality measurement result of the access link, and/or the like. A link adaptation technique may be applied to transmission of a physical channel or a physical signal including the control information. To this end, the relay node may transmit an SRS to the base station, and the base station may receive the SRS and estimate a quality of an uplink channel.

The control information may be transmitted to the relay node or transmitted to the base station through the control link or Uu link. In this case, the entity transmitting or receiving the control information may be a repeater (e.g., an MT entity of the repeater). Alternatively, the control information may be transmitted to the relay node or transmitted to the base station through the backhaul link. In this case, the entity transmitting or receiving the control information may be a repeater (e.g., a forwarding entity of the repeater).

The relay node may relay a signal transmitted for itself (e.g., PDCCH including the DCI, PDSCH, a signal transmitted for beam management of the relay node, etc.) to the terminal. Alternatively, the relay node may not relay a signal transmitted for itself to the terminal. Alternatively, whether to transmit the signal may be determined by the relay node. For example, when the relay node receives a signal for itself and does not receive a signal for the terminal in a certain downlink symbol, the relay node may not relay the corresponding downlink symbol (or its signal) to the terminal.

As described above, the relay node may relay a signal (e.g., uplink signal) received from the terminal to the base station through the backhaul link (or control link). The signal may be referred to as a relay signal (e.g., uplink relay signal). Also, the relay node may transmit a signal (e.g., uplink signal) generated by the relay node to the base station through the backhaul link (or control link). The signal may be referred to as a non-relay signal (e.g., uplink non-relay signal). The uplink relay signal and the uplink non-relay signal may be transmitted to the base station as being multiplexed in the time domain, frequency domain, and/or spatial domain. The uplink relay signal and the uplink non-relay signal may include PUCCH, PUSCH, DM-RS, PT-RS, SRS, PRACH, and the like.

For example, an uplink relay signal and an uplink non-relay signal may be transmitted from the relay node to the base station in the same time period (e.g., the same symbol(s) and the same slot(s)). In this case, the relay node may perform an operation of summing the uplink relay signal and the uplink non-relay signal, and the summed signal may be transmitted to the base station. The uplink relay signal may refer to an uplink signal received from the terminal or an uplink signal received from the terminal and passed through a predetermined radio frequency (RF) processing unit (e.g., filtering, power amplifier, etc.). The uplink non-relay signal may refer to a signal generated in a baseband and passed through an RF processing unit or a passband operation. The operation of summing the uplink relay signal and the uplink non-relay signal may be performed in an RF band or a passband. Also, the operation of summing the uplink relay signal and the uplink non-relay signal may be performed in the time domain. The relay node may transmit the summed (or multiplexed) signals according to the above-described transmission timing (e.g., backhaul link (or control link) uplink timing).

When the terminal connected to the relay node through the access link does not transmit an uplink signal in a corresponding time period, the uplink relay signal may not include a meaningful signal (e.g., uplink signal of the terminal). That is, the relay node may not recognize whether an uplink non-relay signal is actually multiplexed with an uplink signal received from the terminal by the above-described operation, and may perform the operation of summing the signals regardless of whether they are multiplexed. The base station may allocate an uplink non-relay signal and an uplink relay signal so that the uplink non-relay signal and the uplink relay signal do not overlap in the same resource. Accordingly, the relay node may assume that the uplink non-relay signal and the uplink relay signal do not overlap in the same resource (e.g., the same symbol and the same frequency region), and perform the operation based on the assumption.

As another example, the uplink relay signal and the uplink non-relay signal may be arranged in different time periods (e.g., different symbol(s) and different slot(s)). In this case, the above-described multiplexing operation of the relay node may not be performed. The relay node may perform an operation of relaying an uplink signal received from the terminal to the base station in a first time period, and may perform an operation of transmitting a signal generated by itself to the base station in a second time period. The first time period and the second time period may not overlap. A signal transmitted in the first time period and a signal transmitted in the second time period may be transmitted according to the same transmission timing (e.g., the above-described backhaul link (or control link) uplink timing). Alternatively, a signal transmitted in the first time period and a signal transmitted in the second time period may be transmitted based on different transmission timings.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. An operation method of a repeater in a mobile communication system, the operation method comprising:
receiving, from a base station, information on a backhaul reception beam and/or a backhaul transmission beam;
receiving, from the base station, information on an access link transmission beam and/or an access link reception beam, or obtaining information on the access link transmission beam and/or the access link reception beam from the information on the backhaul reception beam and/or the backhaul transmission beam;
performing communication with the base station by using the backhaul reception beam and/or the backhaul transmission beam formed using the information on the backhaul reception beam and/or the backhaul transmission beam; and
performing communication with a terminal by using the access link transmission beam and/or the access link reception beam formed using the information on the access link transmission beam and/or the access link reception beam,
wherein the backhaul reception beam is a beam for the repeater to receive a signal from the base station, the backhaul transmission beam is a beam for the repeater to transmit a signal to the base station, the access link transmission beam is a beam for the repeater to transmit a signal to the terminal, and the access link reception beam is a beam for the terminal to receive a signal from the repeater.

2. The operation method according to claim 1, wherein the information on the backhaul reception beam is indicated based on a quasi-co-location (QCL) source signal having a QCL relationship with a downlink signal transmitted from the base station to the repeater and a QCL parameter for which the QCL relationship is established.

3. The operation method according to claim 1, wherein the information on the backhaul transmission beam is indicated based on a source signal having a QCL relationship or spatial relation with an uplink signal transmitted from the repeater to the base station or a downlink signal transmitted from the base station to the repeater and a QCL parameter for which the QCL relationship or spatial relation is established.

4. The operation method according to claim 1, wherein the information on the access link transmission beam is indicated based on a codebook, the codebook including entry(ies) each corresponding to a precoder applied to a signal transmitted to the terminal through an access link with the terminal.

5. The operation method according to claim 4, wherein at least a part of the codebook is preconfigured in the repeater or received from the base station, and the information on the access link transmission beam is indicated by index(es) indicating at least one entry belonging to the codebook.

6. The operation method according to claim 1, wherein the information on the access link reception beam is indicated based on a codebook, the codebook including entry(ies) each corresponding to a reception filter applied to a signal received from the terminal through an access link with the terminal.

7. The operation method according to claim 6, wherein at least a part of the codebook is preconfigured in the repeater or received from the base station, and the information on the access link reception beam is indicated by index(es) indicating at least one entry belonging to the codebook.

8. The operation method according to claim 1, wherein when the repeater is configured as an intelligent reflecting surface (IRS), the information on the backhaul transmission beam and/or the information on the access link transmission beam includes phase shift values for a plurality of phase control elements constituting the IRS.

9. The operation method according to claim 8, wherein the backhaul transmission beam and/or the access link transmission beam are formed based on beamforming by the phase control elements.

10. An operation method of a base station in a mobile communication system, the operation method comprising:
transmitting, to a repeater, information on a backhaul reception beam and/or a backhaul transmission beam;
transmitting, to the repeater, information on an access link transmission beam and/or an access link reception beam;
performing communication with the repeater by using the backhaul reception beam and/or the backhaul transmission beam formed using the information on the backhaul reception beam and/or the backhaul transmission beam; and
allowing the repeater to communicate with a terminal by using the access link transmission beam and/or the access link reception beam formed using the information on the access link transmission beam and/or the access link reception beam,
wherein the backhaul reception beam is a beam for the repeater to receive a signal from the base station, the backhaul transmission beam is a beam for the repeater to transmit a signal to the base station, the access link transmission beam is a beam for the repeater to transmit a signal to the terminal, and the access link reception beam is a beam for the terminal to receive a signal from the repeater.

11. The operation method according to claim 10, wherein the information on the backhaul reception beam is indicated based on a quasi-co-location (QCL) source signal having a QCL relationship with a downlink signal transmitted from the base station to the repeater and a QCL parameter for which the QCL relationship is established.

12. The operation method according to claim 10, wherein the information on the backhaul transmission beam is indicated based on a source signal having a QCL relationship or spatial relation with an uplink signal transmitted from the repeater to the base station or a downlink signal transmitted from the base station to the repeater and a QCL parameter for which the QCL relationship or spatial relation is established.

13. The operation method according to claim 10, wherein the information on the access link transmission beam is indicated based on a codebook, the codebook including entry(ies) each corresponding to a precoder applied to a signal transmitted to the terminal through an access link with the terminal.

14. The operation method according to claim 10, wherein the information on the access link reception beam is indicated based on a codebook, the codebook including entry(ies) each corresponding to a reception filter applied to a signal received from the terminal through an access link with the terminal.

15. The operation method according to claim 10, wherein when the repeater is configured as an intelligent reflecting surface (IRS), the information on the backhaul transmission beam and/or the information on the access link transmission beam includes phase shift values for a plurality of phase control elements constituting the IRS.

16. A repeater in a mobile communication system, the repeater comprising:
a processor;
at least one transceiver connected to the processor; and
a memory storing at least one instruction executable by the processor,
wherein when executed by the processor, the at least one instruction causes the repeater to:
receive, from a base station and through the at least one transceiver, information on a backhaul reception beam and/or a backhaul transmission beam;
receive, from the base station and through the at least one transceiver, information on an access link transmission beam and/or an access link reception beam, or obtain information on the access link transmission beam and/or the access link reception beam from the information on the backhaul reception beam and/or the backhaul transmission beam;
perform communication, with the base station and through the at least one transceiver, by using the backhaul reception beam and/or the backhaul transmission beam formed using the information on the backhaul reception beam and/or the backhaul transmission beam; and
perform communication, with a terminal and through the at least one transceiver, by using the access link transmission beam and/or the access link reception beam formed using the information on the access link transmission beam and/or the access link reception beam,
wherein the backhaul reception beam is a beam for the repeater to receive a signal from the base station, the backhaul transmission beam is a beam for the repeater to transmit a signal to the base station, the access link transmission beam is a beam for the repeater to transmit a signal to the terminal, and the access link reception beam is a beam for the terminal to receive a signal from the repeater.

17. The terminal according to claim 16, wherein the information on the backhaul reception beam is indicated based on a quasi-co-location (QCL) source signal having a QCL relationship with a downlink signal transmitted from the base station to the repeater and a QCL parameter for which the QCL relationship is established.

18. The terminal according to claim 16, wherein the information on the backhaul transmission beam is indicated based on a source signal having a QCL relationship or spatial relation with an uplink signal transmitted from the repeater to the base station or a downlink signal transmitted from the base station to the repeater and a QCL parameter for which the QCL relationship or spatial relation is established.

19. The terminal according to claim 16, wherein the information on the access link transmission beam is indicated based on a codebook, the codebook including entry(ies) each corresponding to a precoder applied to a signal transmitted to the terminal through an access link with the terminal.

20. The terminal according to claim 16, wherein the information on the access link reception beam is indicated based on a codebook, the codebook including entry(ies) each corresponding to a reception filter applied to a signal received from the terminal through an access link with the terminal.
